(19) Europäisches Patentamt
European Patent Office
Office européen des brevets

(11) **EP 3 461 054 A1**

(12) **EUROPEAN PATENT APPLICATION**

(43) Date of publication:
**27.03.2019 Bulletin 2019/13**

(51) Int Cl.:
***H04L 9/00*** *(2006.01)*

(21) Application number: **17382623.1**

(22) Date of filing: **20.09.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Universidad de Vigo
36310 Vigo (ES)**

(72) Inventors:
• **TRONCOSO PASTORIZA, JUAN RAMON
36310 VIGO (ES)**
• **PEDROUZO ULLOA, ALBERTO
36310 VIGO (ES)**
• **PEREZ GONZALEZ, FERNANDO
36310 VIGO (ES)**

(74) Representative: **Carvajal y Urquijo, Isabel et al
Clarke, Modet & Co.
Suero de Quiñones, 34-36
28002 Madrid (ES)**

(54) **SYSTEM AND METHOD FOR SECURE OUTSOURCED PREDICTION**

(57) System and method for secure outsourced prediction in untrusted environments. The disclosure includes a system for secure prediction that comprises both secure model computation and encrypted prediction systems which are configured to directly work over encrypted data. The secure model computation and the encrypted prediction systems comprise a secure protocol between client and server and a homomorphic cryptosystem configured to directly operate over encrypted data. The system enables a client to securely outsource the prediction task to an untrusted environment protecting the privacy of the client.

FIG. 1

**Description**

**Technical Field**

The present invention relates to secure processing and, more specifically, to a method and system for secure prediction in outsourced environments.

**Background Art**

There are many different scenarios where prediction tools find application. For example, they are an essential tool when dealing with financial series (comprising specific use cases as cash-flow prediction, default risk prediction, stock-market series prediction, among others), customer churn prediction, prediction of the cloud workload of SaaS providers, prediction systems for home appliance usage, and prediction systems for traffic estimation.

Machine learning methods have become one of the most widespread techniques used to deal with prediction tasks. However, in order to have accurate results, they usually need access to big amounts of data, which are difficult to manage and that normally come from different users, implying a high risk in terms of privacy for the different data owners. To deal with this increasing computational cost, cloud computing has appeared as a promising solution (avoiding costs for the client), but the protection of the users' information becomes much harder. Therefore, the design of mechanisms enabling to efficiently and privately work with outsourced machine learning methods is currently a very hot topic.

Two main functionalities are considered in prediction tasks: a) how to train or obtain a model from a big set of samples with their corresponding outputs, and b) how to predict a new input sample once a trained model is available.

There are several recent works dealing with securing the second problem, through the application of neural networks [1, 2, 3] or more general machine learning algorithms [4, 5]. Among these, [2] stands out by discussing how to homomorphically classify encrypted inputs when having access to an already trained neural network. None of these documents explicitly deals with encrypted training, and none of them deals with prediction operations.

Alternatively, some approaches rely on interactive algorithms among several parties (secure multi-party computation); as an example, [7] shows how to compute several statistical analyses by resorting to secret sharing. However, solutions solely based on multi-party computation imply a high bandwidth usage and the need of keeping an active client to interact with the processing servers. It is highly desirable to obtain solutions which minimize the interaction with the client. The present invention focuses mainly in the use of homomorphic cryptography, either avoiding or minimizing the use of multi-party computation and secret sharing, aiming at a notable reduction in bandwidth and latency.

Another limitation of secret sharing and multi-party computation-based methods is that they require that at least two non-colluding services are available; when this condition is met, secret sharing can be the most computationally efficient method, but in general this condition is not easy to achieve, and in practice, this is a weak security assumption. Hence, the present invention addresses the need of enabling outsourcing the data to only one untrusted service while reducing the user interaction to the minimum possible, which has not been addressed before for prediction services.

In [8] and patent documents WO2014138754-A1 and WO2014137392-A1, the authors propose a privacy-preserving ridge regression method resorting to a combination of homomorphic cryptography (based on the Paillier cryptosystem [9], and alternatively, Regev's scheme [10] and Yao garbled circuits). The proposed scenario features two main processing modules: an evaluator who receives the encrypted data of different users and who finally learns the model of the regression, and a second party who initializes the algorithm and performs most of the computation offline. The contribution consists in homomorphically performing the linear operations and resorting to garbled circuits for the non-linear operations. The results are compared with both a solely homomorphic or a solely secret sharing solution. However, this approach has two drawbacks: the first one is that, as opposed to the present invention, this solution considers that each sample belongs to a different user and the whole database cannot be sent encrypted by only one user; the second limitation is that this solution unveils the trained model to the outsourced party, which is incompatible to a secure outsourced scenario where only the client must be able to decrypt the trained model.

More recent works [11, 12] by Y. Aono et al. deal with private linear and logistic regressions. [11] claims to improve the results of [8] from a running time of about 8.75 hours to 10 minutes (working with a simulated dataset of $10^8$ samples, each one of 20 dimensions). The methodology followed in both works is similar: the authors enable the computation of some operations directly by the users in such a way that only the operations which can be easily performed in the encrypted domain are outsourced. They use both Paillier, Learning with Errors (LWE)-based cryptosystems and Ring Learning with Errors (RLWE)-based cryptosystems to perform as many homomorphic additions as the number of samples in the database (only the additive homomorphism is used); users consider a modified version of the encryption primitives, and they have to minimize a cost function after decryption. However, as a limitation, this system is only designed for the case when there are as many users or data sources as samples in the database, and it is inefficient when the number of samples is much higher than the number of clients, as the modified encryption step becomes a bottleneck for the client. If there is only one database owner who has to encrypt all the samples in the trusted domain, this algorithm would result in a computational cost of the encryption for all the samples higher than the cost of the to-be-outsourced algorithm. This does not happen working with the system of the present invention, which is designed to deal with only one data source.

Finally, there is some related art based solely on homomorphic computation, such as the work [13], which deals with linear regressions, or [14], which deals with algorithms like Fisher's Linear Discriminant Classifiers and other machine learning primitives. However, none of them are specifically applied or studied on a prediction scenario. The first one resorts to a RLWE [15] extension of the scale-invariant cryptosystem presented in [16]. It uses several optimizations to efficiently compute covariance matrices and, in order to homomorphically solve the linear system, the authors resort to the Cramer's rule computing the determinants via minors, which implies a computational cost of $O(d!)$ (being $d$ the number of dimensions for each sample). For samples with a high number of dimensions this scheme becomes unfeasible, such that the maximum number of dimensions is 5, which is completely useless in practical scenarios and much lower than the dimensionality found in practical scenarios (which need around one hundred dimensions) like those the present invention addresses. Additionally, when working with somewhat homomorphic cryptosystems, as the number of consecutive multiplications increases, the computational cost of homomorphic operations worsens. As an example, for a dataset of size 262144 and 5 dimensions, the total runtime of this algorithm is 517 minutes, which yields a completely impractical overhead with respect to the unprotected solution, much higher than the one produced by the solution proposed in the present invention (no more than 1 minute even considering one hundred of dimensions and the same size for the dataset), which introduces mechanisms to alleviate this effect.

*Bibliographic references*

[1] M. Barni, P. Failla, R. Lazzeretti, A. R. Sadeghi, and T. Schneider. Privacy-Preserving ECG Classification With Branching Programs and Neural Networks. IEEE Transactions on Information Forensics and Security, 6(2):452-468, June 2011.

[2] N. Dowlin, R. Gilad-Bachrach, K. Laine, K. Lauter, M. Naehrig, and J. Wernsing. CryptoNets: Applying Neural Networks to Encrypted Data with High Throughput and Accuracy. In ICML, pages 201-210, 2016.

[3] Pengtao Xie, Misha Bilenko, Tom Finley, Ran Gilad-Bachrach, Kristin E. Lauter, and Michael Naehrig. Crypto-Nets: Neural Networks over Encrypted Data. CoRR, abs/1412.6181, 2014.

[4] Joppe W. Bos, Kristin Lauter, and Michael Naehrig. Private predictive analysis on encrypted medical data. Journal of Biomedical Informatics, 50:234 - 243, 2014. Special Issue on Informatics Methods in Medical Privacy.

[5] Raphael Bost, Raluca Ada Popa, Stephen Tu, and Shafi Goldwasser. Machine Learning Classification over Encrypted Data. Cryptology ePrint Archive, Report 2014/331, 2014. http://eprint.iacr.org/2014/331.

[6] A. Pedrouzo-Ulloa, J. R. Troncoso-Pastoriza and F. Perez-Gonzalez. Number Theoretic Transforms for Secure Signal Processing. IEEE Transactions on Information Forensics and Security, vol. 12, no. 5, pp. 1125-1140, May 2017.

[7] D. Bogdanov, L. Kamm, S. Laur, and V. Sokk. Rmind: a Tool for Cryptographically Secure Statistical Analysis. IEEE Transactions on Dependable and Secure Computing, PP(99):1-1, 2016.

[8] V. Nikolaenko, U. Weinsberg, S. Ioannidis, M. Joye, D. Boneh, and N. Taft. Privacy-preserving ridge regression on hundreds of millions of records. In Security and Privacy (SP), 2013 IEEE Symposium on, pages 334-348, May 2013.

[9] P. Paillier. Public-Key Cryptosystems Based on Composite Degree Residuosity Classes. In EUROCRYPT'99, volume 1592 of LNCS, pages 223-238. Springer, 1999.

[10] Oded Regev. On lattices, learning with errors, random linear codes, and cryptography. J. ACM, 56(6):34:1-34:40, September 2009.

[11] Yoshinori Aono, Takuya Hayashi, Le Trieu Phong, and Lihua Wang. Fast and secure linear regression and biometric authentication with security update. Cryptology ePrint Archive, Report 2015/692, 2015. http://eprint.iacr.org/2015/692.

[12] Yoshinori Aono, Takuya Hayashi, Le Trieu Phong, and Lihua Wang. Scalable and secure logistic regression via homomorphic encryption. Cryptology ePrint Archive, Report 2016/111, 2016. http://eprint.iacr.org/2016/111.

[13] David Wu and Jacob Haven. Using Homomorphic Encryption for Large Scale Statistical Analysis. Technical report, Standford University, 2012.

[14] Thore Graepel, Kristin E. Lauter, and Michael Naehrig. ML Confidential: Machine Learning on Encrypted Data. In Information Security and Cryptology - ICISC 2012 - 15th International Conference, Seoul, Korea, November 28-30, 2012, Revised Selected Papers, pages 1-21, 2012.

[15] V. Lyubashevsky, C. Peikert, and O. Regev. On Ideal Lattices and Learning with Errors over Rings. J. ACM, 60(6):43:1-43:35, Nov 2013.

[16] Zvika Brakerski. Fully homomorphic encryption without modulus switching from classical GapSVP. In Reihaneh Safavi-Naini and Ran Canetti, editors, Advances in Cryptology | CRYPTO 2012, volume 7417 of Lecture Notes in Computer Science, pages 868-886. Springer, 2012.

[17] Peter J. Brockwell and Richard A. Davis. Introduction to Time Series and Forecasting. Springer-Verlag, New York, second edition, 2002.

[18] P. J. Davis. Circulant Matrices. American Mathematical Society, Providence, Rhode Island, 1994.

[19] Junfeng Fan and Frederik Vercauteren. Somewhat Practical Fully Homomorphic Encryption. IACR Cryptology ePrint Archive, 2012:144, 2012. URL http://eprint.iacr.org/2012/144

[20] H. J. Nussbaumer. Fast Fourier Transform and Convolution Algorithms. Springer, 1982.

[21] Sanford Weisberg. Applied Linear Regression. Wiley, Hoboken NJ, third edition, 2005.

**Summary of Invention**

The present invention refers to a system and method for secure outsourced prediction in untrusted environments. The method comprises a first entity (a client device, such as a computer, a laptop or a smartphone) encrypting input data using homomorphic encryption to obtain encrypted input data, and transmitting the encrypted input data to a second entity (e.g. a server or a plurality of servers). The method also comprises the second entity computing an encrypted model for prediction; computing an encrypted prediction result for the input data using the encrypted model for prediction and the encrypted input data; and transmitting the encrypted prediction result to the first entity. Finally, the first entity decrypts the encrypted prediction result using homomorphic encryption, obtaining a prediction result.

According to a first embodiment, the computing of the encrypted model for prediction comprises a homomorphic computation (that is, the encrypted model is directly computed over the encrypted input data by resorting to a homomorphic encryption scheme), by the second entity, using the encrypted input data. Alternatively, the computing of the encrypted model for prediction comprises an interactive computation between the second entity and a trusted module of the second entity that can be accessed by the first entity. In another embodiment, the computing of the encrypted model for prediction comprises an interactive computation between the first entity and the second entity. The encrypted prediction result may also be homomorphically computed by the second entity or interactively computed with the trusted module or with the first entity.

In an embodiment, the computing of the encrypted model for prediction comprises determining the best available model for prediction among a set of available models.

According to a second aspect of the invention, it is provided a system for secure outsourced prediction. The system comprises a first entity and a second entity. The first entity is a trusted component (a client device) and the second entity is an untrusted component that may comprise one or more servers. The first entity comprises an encryption module configured to encrypt input data using homomorphic encryption to obtain encrypted input data and a communication module configured to transmit the encrypted input data to the second entity. The second entity comprises a processing module configured to compute an encrypted model for prediction, and compute an encrypted prediction result for the input data using the encrypted model for prediction and the encrypted input data; and a communication module configured to transmit the encrypted prediction result to the first entity. The first entity further comprises a decryption module configured to decrypt the encrypted prediction result using homomorphic encryption, and obtain a prediction result.

The processing module of the second entity may be configured to homomorphically compute the encrypted model for prediction and/or the encrypted prediction result using the encrypted input data. Alternatively, the second entity may comprise a trusted module that can be accessed to by the first entity, and the processing module of the second entity may be configured to interactively compute the encrypted model for prediction with the trusted module or directly with the first entity using an interactive protocol.

**Brief Description of Drawings**

Disclosed embodiments are illustrated by way of example, and not by way of limitation, in the figures of the accompanying drawings.

Figure 1 shows the general structure of a secure outsourced prediction system according to an embodiment of the present disclosure, comprising a client component and an outsourced component.

Figure 2 represents a specific structure of the secured outsourced prediction system where the outsourced component deploys a trusted element that can be accessed by the client.

Figures 3A and 3B show specific and illustrative descriptions of a secure prediction task according to two different embodiments.

Figure 4 shows a diagram flow of the process implemented by the server to accomplish a secure outsourced prediction calculation.

Figure 5 represents a diagram flow of the process implemented by the server to obtain the best model for prediction.

Figure 6 shows a general and illustrative description for a secure model computation.

Figure 7 shows a general and illustrative description for a secure prediction given a model as input.

**Detailed description**

Disclosed embodiments include methods, apparatuses, and systems for a secured and outsourced prediction in untrusted environments. The disclosure includes a system for secure prediction that comprises both secure model computation and encrypted prediction systems, which are configured to directly work over encrypted data. The secure model computation and the encrypted prediction systems comprise a secure protocol between client and server and a homomorphic cryptosystem configured to directly operate over encrypted data. The system enables a client to securely outsource the prediction task to an untrusted environment protecting the privacy of the client. According to one embodiment, the secure prediction system implements the somewhat homomorphic cryptosystem of Fan and Vercauteren enabling to operate with encrypted data.

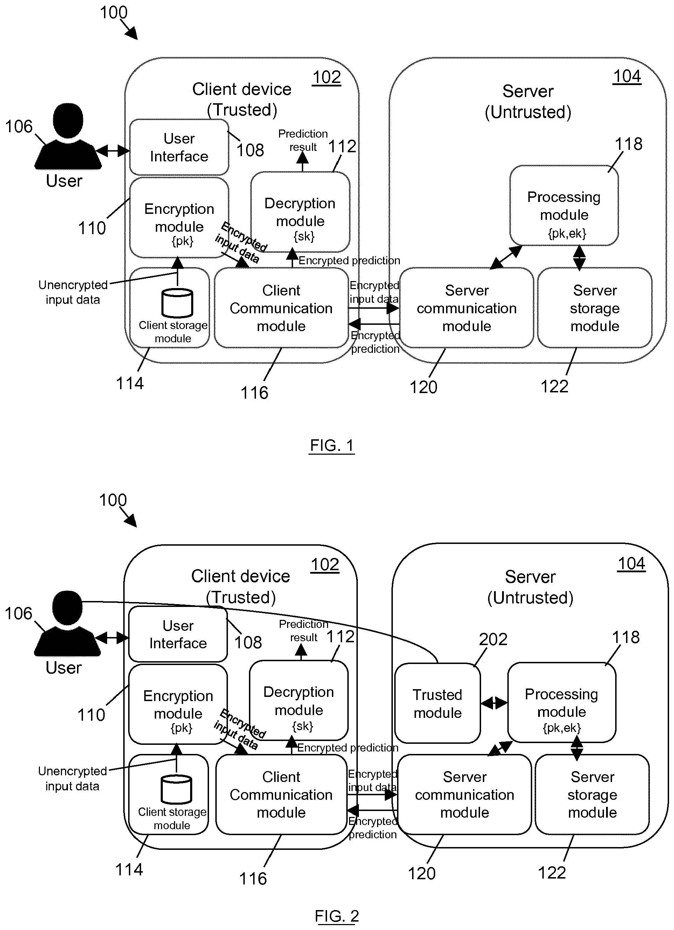

**Figure 1** depicts the general structure of a secure outsourced prediction system 100 according to a first embodiment. The system comprises a first entity 102 (client device, a trusted component of the system), and a second entity 104 (an untrusted outsourced component of the system, such as a server, a server module or a plurality of servers), that communicate with each other through their respective communication modules, client communication module 116 and server communication module 120. A user 106 owns a pair of keys (secret key {sk}, public key {pk}), and communicates directly with the client device 102 through a user interface 108. Both the client device 102 and the server 104 comprise respective storage modules, client storage module 114 and server storage module 122, for storing data and keys. The client device 102 comprises an encryption module 110, which takes clear-text data (i.e. unencrypted client data) from the client storage module 114 and encrypts it with a public key {pk}, and a decryption module 112, which receives encrypted data (an encrypted prediction computed by the server 104) from the client communication module 116 and decrypts it with a secret key {sk} to obtain a prediction. In an embodiment, the client device 102 may include a processing module (e.g. one or more processors), not depicted in Figure 1, which could handle pre- and post-processing and perform all the intermediary processes during the interactions (for instance, the encrypted prediction may further require, once decrypted, a post-processing step enabling further operations in unencrypted form which can be harder to compute in the untrusted component to optimize the load balancing between client and server devices, or to adapt the results to the required format by the user interface, or to reencrypt the ciphertexts to allow for the efficient computation of further homomorphic operations).

The server 104 comprises a processing module 118, which holds a pair of public key {pk} and evaluation key {ek}, and takes encrypted data from the server storage module 122 and performs model training and predictions, storing the results in the server storage module 122. The processing module 118 may include 2 sub-modules, a first processing sub-module for model computation and a second processing sub-module for predictions.

**Figure 2** depicts another embodiment of the secure outsourced prediction system 100 where the server 104 comprises a trusted module 202 that can be accessed by the client device 102, and that can interact with other elements of the server 104.

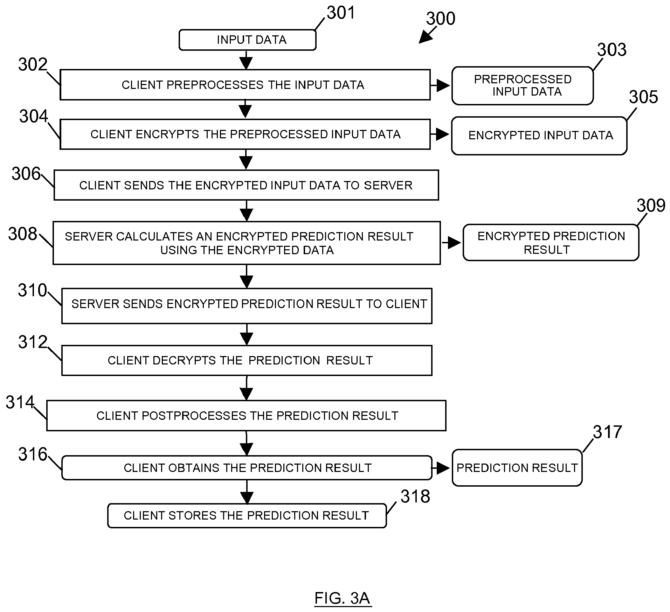

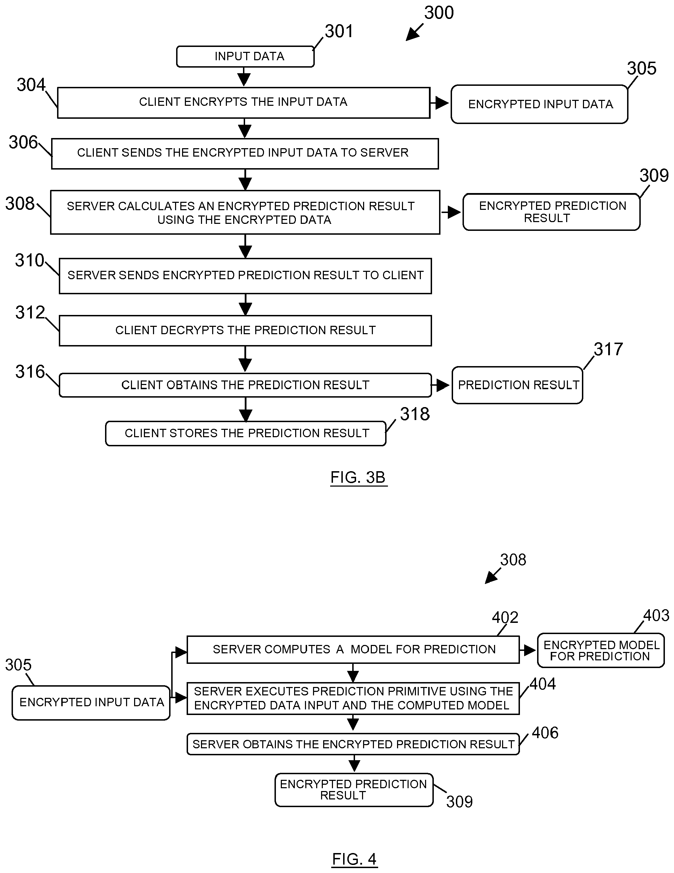

**Figures 3A** and **3B** each represent a specific and illustrative flow diagram of a secure prediction process 300 implemented according to an embodiment of the present disclosure. In the embodiment of Figure 3A, contrary to the embodiment of Figure 3B, pre-processing 302 and post-processing 314 steps are carried out. The client device 102 retrieves input data 301 (for instance, according to one embodiment, the input data 301 may be a temporal sequence which can comprise a set of time series representing the household income and monthly expenses of a customer, among others) from the client storage module 114 and preprocesses 302 the input data 301 using a processing module, not depicted in Figures 1 and 2, obtaining preprocessed input data 303. The preprocessing step 302 is an optional step which may include, for instance the encoding and packing of several data samples in the same ciphertext, the transformation of the input data, the polyphase decomposition of the input data, or a combination thereof. The client device 102 encrypts 304 the preprocessed input data 303 using the encryption module 110 to produce encrypted input data 305. Then, the client device 102 sends 306 the encrypted input data 305 to the server 104 using the client communication module 116. The server 104 computes 308 an encrypted prediction result 309 for the input data 301. Thereafter, the server 104 sends 310 the encrypted prediction result 309 to the client device 102 through the server communication module 120, and the client device 102 decrypts 312 the encrypted prediction result 309 in the decryption module 112. The client device 102 postprocesses 314 the preprocessed prediction result, obtaining 316 the prediction result 317 and stores 318 the prediction result 317 on the client storage module 114.

In the embodiment of Figure 3B there is no pre-processing 302, so that the client device 102 directly encrypts 304 the input data 301 to obtain encrypted input data 305, and sends 306 the encrypted input data 305 to the server 104. The server 104 calculates 308 an encrypted prediction result 309 using the encrypted input data 305 and sends the encrypted prediction result 309 back to the client device 102, which decrypts 312 it to obtain 316 a prediction result 317. Finally, the client device 102 stores the prediction result 317 on the client storage module 114.

**Figure 4** depicts a flow diagram of the outsourced prediction calculation implemented by the server 104 to compute 308 the encrypted prediction result 309. The server 104 computes 402 an encrypted model for prediction 403. Then, the server 104 executes 404 the prediction primitive given the encrypted input data 305 and the computed encrypted model for prediction 403. Finally, the server 104 obtains 406 the encrypted prediction result 309.

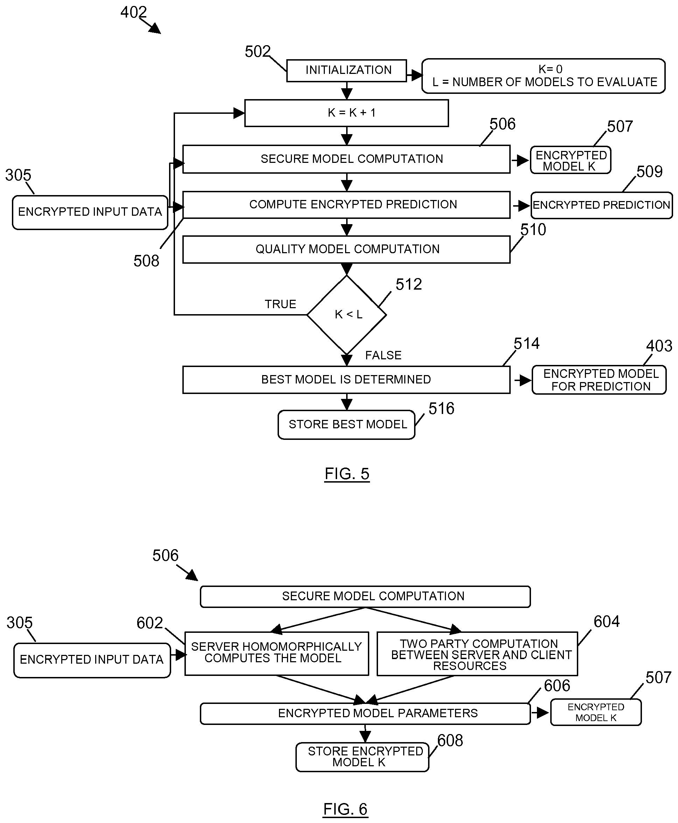

A diagram flow representing in detail the computing 402 of an encrypted model for prediction 403 (for instance according to one embodiment where a regression algorithm is performed, encryptions of the corresponding regression coefficients are computed; according to another embodiment where an Auto-Regressive Integrated Moving Average (ARIMA) model [17] is used, encryptions of the corresponding ARIMA coefficients are computed; in these scenarios several models can be calculated depending on the number of variables which are taken into account) is depicted in **Figure 5.** In particular, this figure shows the computing of the best available model among a determined number of models L to evaluate. In an initialization step 502, a maximum number of models L to check is fixed at the beginning of the process. Then, an iterative process starts. The server 104 computes 506 an encrypted model 507 for the given encrypted input data 305. Afterwards, the server 104 computes an encrypted prediction 508 given the encrypted input data 305 and the encrypted model 507. In the next step, the server 104 obtains a quality measure 510 (several quality measures can be considered as for example AIC (Akaike Information Criterion), AICc (Akaike Information Criterion with correction), BIC (Bayesian Information Criterion), ... which are functions that can be computed with both the input data and the model as input, and yield a score on how well the model fits the input data) for the computed encrypted prediction 509 with the current encrypted model 507. The server 104 repeats 512 this process until the maximum number of models L has been considered. Then, the server 104 determines 514 the best encrypted model for prediction 403 and stores the result on the server storage module 122.

**Figure 6** depicts a general and illustrative description for the step of secure model computation 506 used in Figure 5 to obtain the encrypted model for prediction 403. Several processes can be considered depending on the specific structure of the secure outsourced prediction system 100. Considering the secure outsourced prediction system 100 of Figure 1, where the server 104 does not have access to a trusted element 202, the server 104 homomorphically computes the model 602 (that is, resorting to an additive and multiplicative homomorphic cryptosystem homomorphic additions and multiplications can be evaluated over encrypted data, enabling the computation of the encrypted model having only access to the encrypted input data, without decrypting it) given the encrypted input data 305 in the processing module 118. In case the secure outsourced prediction system 100 of Figure 2 is considered (the server 104 having access to the trusted element 202), the server 104 can interact with the trusted element 202 or with the client device 102 (using an interactive protocol) to compute the model, i.e. there is an interactive computation 604 between server 104 and client device 102 resources. Following either process, the server 104 obtains encrypted model parameters 606 for encrypted model K 507. Finally, the server stores 608 the obtained encrypted model 507 on the server storage module 122.

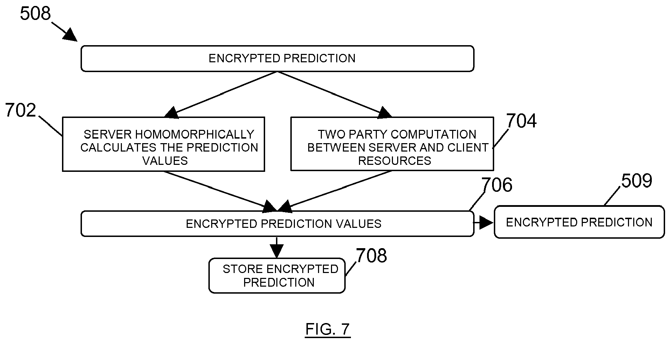

**Figure 7** shows a schematic flow diagram of the encrypted prediction computation step 508 of Figure 5. In this case several processes can also be considered depending on the particular structure of the secure outsourced prediction system 100. Where the server 104 cannot access a trusted element 202 (embodiment of Figure 1), the server 104 homomorphically computes the prediction values 702. For the embodiment of Figure 2, the server 104 can interact with the trusted module 202 to compute the prediction 604. Either way, the server 104 obtains encrypted prediction values 606. Finally, the server module stores the obtained encrypted prediction 509 on the server storage module 122.

The system and method of the present invention may be applied to any prediction scenario dealing with sensitive data in an outsourced untrusted environment, such as predictions for financial services, cloud workload predictions, home appliance usage predictions, and traffic estimation, among others.

According to an embodiment of the present invention, the client sends a plurality of financial data encrypted with his/her/its public key to a prediction service provider (implemented by a server) that makes predictions based on some or all of the encrypted data using a possibly proprietary predictor and possibly additional data, and returns financial predictions. These predictions can only be decrypted by the client using his/her/its secret key, and the service provider does not have access to the input data in the clear, nor the financial predictions. As an example, the client may be a bank that wants to predict the risk of default of one of its clients to whom it granted a loan. A prediction service provider may output more accurate predictions on default risks than the bank, due to the use of a proprietary algorithm and/or proprietary additional data. The bank outsources the prediction to the prediction service provider. Due to legal binding and privacy concerns, the bank does not want to grant access to the prediction service provider on any of the client's data, so it encrypts them and all the subsequent processing is carried out on encrypted client data, thus blocking the prediction service provider from any misuses. Additionally, this procedure also precludes the use of de-anonymization techniques by the service provider. Client data may comprise, but is not limited to, time series of household income, time series of credit card limits, time series of mortgage risk, time series of monthly expenses, time series of loan amount, time series of monthly rental expenses, marital status, number of children, number of vehicles in the household, age, occupation, address, and combinations and transformations of them, for example, using principal component analysis.

In another embodiment of the present invention, the client sends client data containing information relating to on one or more customers (customer data), encrypted with its public key to a prediction service provider that makes predictions based on some or all of the encrypted customer data using a possibly proprietary predictor and possibly additional data, and returns predictions on customer churn, that is, identify which customers are likely to churn, or the probability that a certain customer or customers will churn. These predictions can only be decrypted by the client using its secret key, and the service provider does not have access to the customer data in the clear, nor the predicted list of customers. As an example, the client may be a company that provides a subscriber-based service, such as a mobile operator or a pay TV operator, that is interested in learning which customers are likely to cancel the service, in order to offer them special packages or discounts, or in measuring the impact of retention activities such as loyalty programs on churn rates. The client may not have the computational resources or the necessary skills in house to make the prediction, so the client outsources it to a prediction service provider. Due to legal binding and privacy concerns, the client does not want to grant access to the prediction service provider on any of the customer data, so it encrypts them and all the subsequent processing is carried out on encrypted customer data, thus blocking the prediction service provider from any misuses. Customer data may comprise, for instance, data from one or more customers such as time series of total debt, time series of contract left days, time series of the total revenue as of current month, whether the customer is new, the number of counts of a certain digit on the customer phone number, identification data of the sales representative, and combinations and transformations of them, for example, using principal components analysis.

In yet another embodiment, the invention may be applied for the prediction of the cloud workload of SaaS providers, where one cloud-based software as a service (SaaS) wants to allocate resources (e.g., virtual machines) dynamically in order to provide a better quality of service (QoS) to its customers. This dynamic provisioning of resources allows for a reduction of costs to the application provider, as resources can be released whenever they are not needed. The challenge in dynamic resource allocation is to be able to predict what will be the demand in a given time in order to provision for varying workloads. The SaaS provider sends a plurality of customer data and the desired quality of service encrypted with its public key to a prediction service provider that makes predictions based on some or all of the encrypted data using a possibly proprietary predictor and possibly additional data, and returns predictions on the needed resources and/or the workload. These predictions can only be decrypted by the SaaS provider using its secret key, and the service provider does not have access to the input data in the clear, nor the output predictions. Due to legal binding and privacy concerns, the SaaS provider does not want to grant access to the prediction service provider on any of the customer's and/or its own data, so it encrypts them and all the subsequent processing is carried out on encrypted customer's and/or its own data, thus blocking the prediction service provider from any misuses.

Data sent by the SaaS provider may comprise, but is not limited to, time series of the provider's workload, time series of the number of running applications, time series of workload per running application, time series of new requests, expected QoS per application, number of rejected requests, number of QoS violations, average service time, and combinations and transformations of them, for example, using principal components analysis.

According to a further embodiment, the present invention may be applied for the prediction of home appliance usage. The client sends client data containing a plurality of power consumption data for different customers, encrypted with its public key, to a prediction service provider that makes predictions based on some or all of the encrypted customer data using a possibly proprietary predictor and possibly additional data, and returns predictions on appliance usage, (i.e., predicts home appliance usage when users are not available). These predictions can only be decrypted by the client using its secret key, and the service provider does not have access to the customer data in the clear, nor the predicted list of customers. As an example, the client may be a smart house or even the electricity company which is interested in learning the best energy assignment plan, in order to efficiently administer the energy consumption (load balancing), helping to reduce costs. The client may not have the computational resources or the necessary skills in house to make the prediction, so the client outsources it to a prediction service provider. Due to legal privacy concerns, the client does not want to grant access to the prediction service provider on any of the customer data, so it encrypts them and all the subsequent processing is carried out on encrypted customer data, thus blocking the prediction service provider from any misuses. Customer data may comprise, among others, consumption patterns and electricity usage data.

In yet another embodiment of the present invention, the client sends client data containing a plurality of traffic and weather data, encrypted with its public key, to a prediction service provider that makes predictions based on some or all of the encrypted customer data using a possibly proprietary predictor and possibly additional data, and returns predictions on different levels of traffic information helping to reduce traffic delays and optimizing the available transportation infrastructure. These predictions can only be decrypted by the client using its secret key, and the service provider does not have access to the customer data in the clear, nor the predicted list of customers. As an example, the client may be any control device measuring the traffic conditions which is interested in helping to efficiently exploit the transportation resources. The client may not have the computational resources or the necessary skills in house to make the prediction, so the client outsources it to a prediction service provider. Due to legal privacy concerns, the client does not want to grant access to the prediction service provider on any of the customer data, so it encrypts them and all the subsequent processing is carried out on encrypted customer data, thus blocking the prediction service provider from any misuses. Customer data may comprise, but is not limited to, weather data, driver behaviour, traffic movements, geographic information, traffic sign information, and more specific information of the different vehicles such as trajectory data from videos and relative position of vehicles with respect to other vehicles.

Hereinafter, several embodiments for the different elements of the system and method of the present invention are disclosed.

Example of a Homomorphic Cryptosystem (encryption module 110, decryption module 112)

First, the used notation is herein introduced. We denote a polynomial element as $a \in R_q[z]$, where

$$R_q[z] = \mathbb{Z}_q[z]/(1 + z^n)$$ (that is, $R_q[z]$ is the set of polynomials over $z$ with maximum degree $n$ - 1 and coefficients belonging to $\mathbb{Z}_q$, where after each polynomial product are reduced modulo $z^n$ + 1). Sometimes we consider one symbolic variable $y$ for the different polynomial elements which compose the ciphertexts, and when needed, we represent vectors whose components are polynomials as $\bar{a}$. The messages are encoded in the polynomial ring $R_t[z]$ and we use two different notations for the coefficients of the polynomials: $[m]_t$ considers that the coefficients belong to the set $[\frac{-t}{2}, \frac{t}{2}]$ and $|m|_t$ reduces the values of the coefficients to the set $[0, t$ - 1$]$. $\left\lfloor \frac{t}{q} a \right\rceil$ for any $a \in R[z]$ is the coefficient-wise division and rounding of the polynomials to the nearest integer in $[\frac{-t}{2}, \frac{t}{2})$, while $\lceil a \rceil$ represents the rounding to the next integer, and $\lfloor a \rfloor$ the rounding to the previous integer. Finally, we denote sampling an element $a$ from a distribution $\chi$ as $a \leftarrow \chi_{key}$.

Below, the basic set of primitives of the FV cryptosystem is included, which are an example of an additively and multiplicatively homomorphic cryptosystem, and whose primitives can be replaced by any other cryptosystem with the same properties in the present invention:

- $KeyGen_{FV}$: Consider $\chi_{key}$, $\chi_{error}$ distributions over $R_q[z]$. Sample $sk = s$ as $s \leftarrow \chi_{key}$, and $pk = (p_0, p_1) = ([-(as + e)]_q, a)$, where $a \leftarrow U(R_q[z])$ is uniformly sampled from $R_q[z]$ and $e \leftarrow \chi_{error}$.

- $Enc_{FV}([m]_t)$: Given $e_1$, $e_2 \leftarrow \chi_{err}$, $u \leftarrow \chi_{key}$, output $ct = ([\Delta[m]_t + p_0 u + e_1]_q, [p_1 u + e_2]_q)$ with $\Delta = \left\lfloor \frac{q}{t} \right\rfloor$.

- $Dec_{FV}(ct)$: Given $ct = (c_0, c_1) \in R_q[y]$, output $\left\lfloor \left\lfloor \frac{t}{q}[c_0 + c_1 s]_q \right\rceil \right\rfloor_t$.

- $Add_{FV}(ct_1 = (c_0, ..., c_{\beta-1}), ct_2 = (c'_0, ..., c'_{\gamma-1}))$: Given $ct_1$, $ct_2$, output $ct_{add} = ([ct_1[0] + ct_2[0]]_q, [ct_1[1] + ct_2[1]]_q, ..., [ct_1[max(\beta, \gamma) - 1] + ct_2[max(\beta, \gamma) - 1]]_q)$.

- $Mult_{FV}(ct_1, ct_2)$: Considering a symbolic variable $y$, we have $\left(\sum_{i=0}^{\beta-1} ct_1[i]y^i\right) \cdot \left(\sum_{i=0}^{\gamma-1} ct_2[i]y^i\right) = \left(\sum_{i=0}^{\beta+\gamma-2} ct_{mult}[i]y^i\right)$. Afterwards, output $\sum_{i=0}^{\beta+\gamma-2} [[ct_{mult}[i]]]_q y^i \in R_q[z, y]$.

- $Relin_{FV}(ct = (c_0, ..., c_{\beta-1}))$: Compute $([c_0 + \sum_{i=2}^{\beta-1} D_{w,q}(c_i) \cdot rlk_{FV}^{(i)}[0]]_q, [c_1 + \sum_{i=2}^{\beta-1} D_{w,q}(c_i) \cdot rlk_{FV}^{(i)}[1]]_q)$, where if the decryption circuit of $ct$ is $c_0 + \sum_{i=1}^{\beta-1} ct[i]s_i$, we have $rlk_{FV}^{(i)} = ([P_{w,q}(s_i) - (\bar{e} + s\bar{a})]_q, \bar{a})$ for $i = 2, ..., \beta - 1$ and where $\bar{e} \leftarrow \chi_{error}^{l_{w,q}}$, $\bar{a} \leftarrow U(R_q[z])^{l_{w,q}}$. The functions $D_{w,q}(a) \in R_q[z]^{l_{w,q}}$ and $P_{w,q}(a) \in R_q[z]^{l_{w,q}}$ output vectors of length $l_{w,q} = \lceil \log_w q \rceil + 1$ as:

$$D_{w,q}(a) = \left([a]_w, \left\lfloor\left\lfloor\frac{a}{w}\right\rceil\right\rfloor_w, ..., \left\lfloor\left\lfloor\frac{a}{w^{l_{w,q}-1}}\right\rceil\right\rfloor_w\right), \quad P_{w,q}(a) = \left([a]_q, [aw]_q, ..., [aw^{l_{w,q}}]_q\right)$$

### Example of a pre-processing 302 and a post-processing 314

The basic functionalities provided by a homomorphic cryptosystem are insufficient for outsourced prediction processes. This invention increases the basic toolset of homomorphic operations by means of pre- and post-processing steps, for which an example is given in the following paragraphs.

The structure is as follows: Firstly, by applying an efficient pre- and post-processing before encryption and after decryption, the ciphertext multiplication homomorphism can be transformed into the cyclic convolution of two encrypted messages. Afterwards, by encrypting the NTT (Number Theoretic Transform) of the messages, element-wise additions and multiplications between the encrypted messages can be homomorphically performed.

**Element-wise additions and multiplications**

Details are herein provided on how the pre- and post-processing can enable performing homomorphic cyclic convolutions between signals. Additionally, once the used cryptosystem with the cyclic convolution property is endowed, the computation of the NTT as a new block which allows for element-wise additions and multiplications can be considered.

**Encrypted Cyclic Convolution**

Along with the linear convolution, the circular or cyclic convolution is a frequently used primitive in signal processing. Implementing a linear convolution with an RLWE cryptosystem like FV, requires a value of $n$ large enough to store the result of the convolution. Conversely, the cyclic convolution poses additional problems as the modular function $f(z) = 1 + z^n$ in the cryptosystem only allows for negacyclic convolutions [18].

We rely on a generalization of the cyclic convolution between two signals $x[l]$, $h[l]$ in terms of a complex value $\alpha$. The $\alpha$-generalized cyclic convolution is defined as

$$y(z) = x(z)h(z) \bmod (1 - \alpha z^n)$$

where $x(z)$, $h(z)$ and $y(z)$ are the Z-transforms of $x[l]$, $h[l]$ and $y[l]$ (we use the definition for the Z-transform as a power series in *z* instead of the more common $z^{-1}$).

This generalization lets us specify different types of convolutions depending on the chosen $\alpha$: for $\alpha$ = -1 we obtain a negacyclic convolution (we refer to [18] for more details on negacyclic convolutions), which corresponds to the homomorphic operation offered by RLWE-based cryptosystems with $f(z) = 1 + z^n$. Conversely, $\alpha$ = 1 conforms to the cyclic or circular convolution. We aim at a regular cyclic convolution ($\alpha$ = 1), but we are bound to a negacyclic one by the cryptosystem homomorphism, as a modular function of the form $f(z) = 1 - z^n$ would not be irreducible in the integers.

Supported by this formulation, we can enable the calculation of a cyclic convolution between two *N*-length polynomials *x[l]* and *h[l]* by carrying out the following steps:

- Prior to encryption, the input signals are pre-processed (302) with component-wise products:

$$x'[l] = x[l]\alpha^{-l/N}(-1)^{l/N}Q, l = 0, \dots, N-1,$$

$$h'[l] = h[l]\alpha^{-l/N}(-1)^{l/N}Q, l = 0, \dots, N-1$$

where *Q* is the quantization applied to signals *x'[l]*, *h'[l]*.

- Then *y'(z)* can be calculated under encryption with a homomorphic polynomial product

$$y'(z) = x'(z)h'(z) \, mod \, (1 + z^N)$$

- The output decrypted signal *y'[n]* is post-processed (314)

$$y[l] = y'[l]\frac{\alpha^{l/N}(-1)^{-l/N}}{Q^2}.$$

With the described procedure, the $\alpha$-generalized cyclic convolution can be successfully implemented with a single product of encrypted polynomials; in particular, the cyclic convolution can be implemented with $\alpha$ = 1.

Consequently, the two main limitations that current approaches have for calculating a cyclic convolution under encryption have been solved: the present approach does not introduce any rounding errors, it does not need to discard any coefficient (reducing the effective cipher expansion), and it can cope with successive operations without intermediate decryptions. Its performance in terms of computational complexity is now evaluated.

**NTT processing (pre-processing 302, post-processing 314)**

For a wide set of the algorithms that the present invention involves, the homomorphic execution of element-wise addition and multiplication is preferred. However, as previously shown, the ciphertext multiplication in the used cryptosystem [19] is equivalent to a negacyclic convolution between the encrypted messages. It is herein explained how both the NTT (Number Theoretic Transform) and INTT (Inverse Number Theoretic Transform) can be leveraged to homomorphically perform these operations.

The Number Theoretic Transforms are transforms with the same structure as the DFT (Discrete Fourier Transform), with the peculiarity that they operate with elements belonging to a finite field or ring instead of the complex field.

More formally, in a finite ring $R_p = \mathbb{Z}_p[z]/f(z)$ with $p = \prod_{i=1}^{K} p_i^{m_i}$, an NTT of size *N* can be defined (with the cyclic convolution property) if the following properties hold [20]:

- There exists an *N*-th root of unity $\alpha$ in $R_p$, for which *gcd($\alpha$,p)* = *gcd(N,p)* = 1.
- *N* is a divisor of *gcd($p_1$ - 1,..., $p_K$ - 1)*.

The expressions for the forward and inverse transforms are

$$X[k] = \sum_{i=0}^{N-1} x[l]\alpha^{lk} \, mod \, p, k = 0,1, \dots, N-1,$$

$$x[l] = N^{-1} \sum_{i=0}^{N-1} X[l]\alpha^{-lk} \; mod \; p, l = 0,1,...,N-1.$$

Analogously to DFTs, NTTs possess a cyclic convolution property, and they also enable fast computation algorithms like radix-2 and radix-4.

Therefore, by combining the previous pre-/post-processing with the computation of the NTT and INTT, we transform the homomorphic negacyclic convolution operation of the cryptosystem into an element-wise multiplication between vectors.

Firstly, we consider the cyclic convolution property of the NTT:

$$NTT(x[k]) * NTT(h[k]) = NTT(x[k]h[k])$$

where * represents the circular or cyclic convolution.

Hence, if we compute the NTT of the messages before encryption and the INTT after encryption, we can resort to the pre- and post-processing to apply the cyclic convolution inside the cryptosystem, and consequently, the element-wise multiplication between the messages.

An example of secure prediction based on linear regression

One of the possible embodiments for obtaining an encrypted model 507 or an encrypted prediction 509 is based on linear regression as a basic primitive (homomorphic computation 602 and 702). The following paragraphs exemplify how this process is implemented in the present invention.

**Linear Regressions**

Given a dataset $\{x_i, y_i\}_{i=1}^{N}$ composed of $N$ samples represented by column vectors $x_i \in \mathbb{R}^d$ , together with their corresponding outputs $y_i \in \mathbb{R}$, the problem of calculating a linear regression is equivalent to obtaining some parameters $\beta = \{\beta_0, ...,\beta_{d-1}\}$ which satisfy:

$$X\beta = y + \epsilon,$$

where

$$X = \begin{pmatrix} x_1^T \\ \vdots \\ x_N^T \end{pmatrix}, \; y = \begin{pmatrix} y_1 \\ \vdots \\ y_N \end{pmatrix}, \; \epsilon = \begin{pmatrix} \epsilon_1 \\ \vdots \\ \epsilon_N \end{pmatrix},$$

being $\varepsilon$ a noise vector (for more details in linear regression we refer to [21]).

The common step in a linear regression is to minimize the square sum of the residuals $\|\varepsilon\|^2 = \|y - X\beta\|^2$, which gives the following estimator for the $\beta$ parameters:

$$\hat{\beta} = (X^T X)^{-1} X^T y$$

**Secure Linear Regression based on Homomorphic Cryptography (602)**

As an example, it is now considered the problem of securely computing a linear regression for prediction by resorting solely to homomorphic cryptography (602, 702). Two parties can be distinguished: a) the client (102) who is in charge of encrypting the database to protect its contents (trusted environment), and b) a server (104) who only receives the encrypted database and who has to homomorphically estimate the linear regression coefficients (untrusted environment).

The homomorphic computation of the linear regression can be divided in two main steps:

- computing both $X^TX$ and $X^Ty$, and
- a second step in which the obtained linear system is solved.

**Homomorphically computing the linear system (602)**

It is assumed now that in order to compute the parameters of the linear system (that is, $X^TX$ and $X^Ty$), the secret key owner (102) is the entity in charge of decrypting these linear system parameters and solving it in cleartext in the trusted domain. By homomorphically solving the linear system the final encrypted linear regression estimator can be sent to the data owner.

As the number of samples $N$ in the database is much higher than the number of dimensions for each sample $d$ ($N \gg d$), the step of the linear regression computation conveying the highest computational cost is the first one.

Following this observation, the main objective is to provide an efficient method to outsource the computation of the matrix operations $X^TX$ and $X^Ty$. Additionally, homomorphically solving the system in the encrypted domain presents some further difficulties due to the nature of the operations, so solving the linear system in the trusted domain seems to be the most convenient approach achieving a good performance trade-off. Even so, several methods are now discussed and compared to also solve the system of equations in the encrypted domain.

There are two main approaches to homomorphically perform the first step, either encoding matrix $X$ row-wise or column-wise in each ciphertext. The main differences between both schemes in terms of computational cost and the needed tools is next discussed.

**Row-wise encoding**

Let $Enc(s, X)$ represent the encryption of each row $x_i$ of $X$ in a different ciphertext using the same secret key $s$ as

$$Enc(s, X) = \left( Enc(s, x_0), \dots, Enc(s, x_{N-1}) \right)^T$$

Now, we want to compute $X^TX$ as

$$X^TX = x_0^T x_0 + \cdots + x_{N-1}^T x_{N-1}, \tag{1}$$

being the result of each multiplication a square matrix with dimensions $d \times d$.

When working with homomorphic cryptosystems such as FV [19], we have to perform these matrix multiplications resorting to the homomorphic operations enabled by the cryptosystem. We show how to perform them in the following paragraphs exemplified for FV, but they can be generalized to any other cryptosystem with the same homomorphic properties.

Hence, we recall that we work with messages represented as polynomials belonging to the ring $R_t = Z_t[z]/(1 + z^n)$, and each ciphertext is composed of several polynomial elements belonging to the ring $R_q = \mathbb{Z}_q[z]/(1 + z^n)$ ($n$ is always a power of two for both $R_t$ and $R_q$).

Therefore, the enabled operations by the cryptosystem are both addition and multiplication of polynomials belonging to the ring $R_t$. In order to homomorphically compute equation (1), we can follow two different procedures: a) encrypting each value of the matrix in a different ciphertext, therefore encrypting $Nd$ different ciphertexts and having a complexity of $O(Nd^2)$ ciphertext multiplications (if after each ciphertext multiplication we perform a relinearization, the total cost would be $O(Nd^2\lceil\log_t q\rceil)$ polynomial multiplications), where each ciphertext multiplication has a computational cost of $O(n \log_2 n)$); and b) resorting to the techniques introduced in [6] which allow us to encrypt a vector of $n$ numbers belonging to $\mathbb{Z}_t$ and to homomorphically compute element-wise additions and multiplications between these encrypted vectors. Applying the pre-processing before encryption and the post-processing after decryption, the homomorphic operations enabled by the cryptosystem are the element-wise addition and multiplication of vectors.

Applying the second approach, the number of required ciphertexts can be reduced to $N$ (always considering $d \leq n$). However, there is an additional overhead caused by the performed operations in the encrypted domain. These are the followed steps:

- For each encrypted row $x_i = (x_{i,0}, ..., x_{i,d-1})$, we homomorphically obtain d ciphertexts which encrypt the constant vectors $(x_{i,j}, ..., x_{i,j})$ for $j = 0, ..., d - 1$. This can be achieved by resorting to automorphisms and relinearization techniques, with a computational cost of $O(Nd^2\lceil\log_t q\rceil)$ polynomial multiplications.

- Equation (1) is computed by multiplying each encrypted row with the corresponding d constant vectors, obtaining N groups of d ciphertexts which represent the $x_i^T x_i$ summands for $i = 1, ..., N.$

- Finally, the ciphertexts corresponding to the same row are added. The total computational cost of the last two steps is $O(Nd)$ ($O(Nd\lceil\log_t q\rceil)$ when considering relinearization after each multiplication) ciphertexts multiplications.

The computation of $X^T y$ can be done in a similar way as $X^T X$, with a smaller computational cost. Additionally, both methods return as a result d ciphertexts for the different rows of $X^T X$ and one ciphertext for $X^T y$ if $n \geq d$ and we exploit the full message space.

If we do not apply the relinearization after a ciphertext multiplication, the second approach features a higher computational cost (by a factor of $\lceil\log_t q\rceil$) than the first one. However, it is important to note that in the first one method the user has to perform a factor of d encryptions more than in the second one. Hence, in a scenario on which the outsourced environment has high computational resources, any reduction from the point of view of the secret key owner is preferred.

Furthermore, if we consider the relinearization in the first method, then a factor $\lceil\log_t q\rceil$ appears. In that case, the differences in computation comes from the need imposed by the second method of computing one additional step for obtaining the constant vectors.

## Column-wise encoding

Consider now a different structure for the matrix $X$ and $y$ as:

$$X = \begin{pmatrix} r_{0,0} & \cdots & r_{0,d-1} \\ \vdots & \ddots & \vdots \\ r_{l-1,0} & \cdots & r_{l-1,d-1} \end{pmatrix}$$

and

$$y = \begin{pmatrix} y'_0 \\ y'_1 \\ \vdots \\ y'_{l-1} \end{pmatrix},$$

where the different $r_{i,j}$ and $y'_i$ are column vectors of $\text{length}\lceil\frac{N}{l}\rceil$ (if there are not enough elements to fill the last vector of each column, they are zero-padded), and in such a way that we encrypt each of this vectors in a different ciphertext (considering that $n$ is the first power of two higher than $\lceil\frac{N}{l}\rceil$).

With this new representation, the computation of $X^T X$ and $X^T y$ is as follows:

$$\{X^T X\}_{i,j} = \sum_{k=0}^{l-1} r_{k,i}^T r_{k,j}$$

and

$$\{X^T y\}_j = \sum_{i=0}^{l-1} r_{i,j}^T y'_i,$$

where both $i,j \in \{0, ..., d - 1\}$.

Consequently, in order to compute the previous expressions, it is needed to resort to element-wise additions and multiplications. Additionally, in this case the calculation of $d$ constant vectors for each encrypted row from the matrix **X** is not required.

Hence, we encrypt the different vectors $r_{i,j}$ and $y'_i$ in different ciphertexts (considering $n \leq \left\lceil \frac{N}{l} \right\rceil$), and we can evaluate the corresponding expressions applying the suggested pre-/post-processing together with an NTT computation.

Finally, we have $d^2 + d$ ciphertexts whose content is the NTT of $\left\lceil \frac{N}{l} \right\rceil$ numbers that we also want to homomorphically add. However, the structure of the cryptosystem does not straightforwardly allow for adding them before encryption. To overcome this limitation, we leverage the structure of the NTT, by realizing that the first coefficients of the NTT are just the sum of all the signal coefficients in the time domain. Hence, when sending back the resulting encryptions to the secret key owner, the latter can decrypt the results and obtain the desired values of $X^TX$ and $X^Ty$ by only retrieving the first coefficient of the decrypted messages.

The computational cost of the outsourced algorithm would amount to $O(d^2l)$ ciphertext multiplications for $X^TX$ and $O(dl)$ ciphertext multiplications for $X^Ty$. Therefore, we have approximately a total cost of $O(d^2 \frac{N}{n} n \log_2 n) \approx O(d^2 N \log_2 n)$ coefficient products modulo $q$. However, for the previous solution based on encrypting rows and using the pre-/post-processing we have $O(dNn \log_2 n)$ coefficient products modulo $q$. Consequently, as we consider $n \geq d$, we can clearly see that encoding by columns is the better option in terms of ciphertext expansion and efficiency (either we have d times more encryptions or we have to compute the different $d$ constant vectors for each ciphertext).

As an optimization, knowing that $X^TX$ is a symmetric matrix, then we do not have to compute the $d^2$ values of the resulting matrix; in fact, only $\frac{d(d+1)}{2}$ elements are potentially unique, and we can reduce the factor $d^2$ to $\frac{d(d+1)}{2}$ in practice. Additionally, it is possible to even optimize the number of ciphertexts which the secret key owner has to decrypt. In order to do this, we can resort to the techniques previously introduced to discard the values of the encryptions, introducing zeros, and to pack the maximum number of values in the same ciphertexts. Therefore, when $n \geq \frac{d(d+1)}{2} + d$ we can make the server (104) return only one ciphertext, and for the counterpart we only need to return a total of $\left\lceil \frac{d(d+1)}{2n} + \frac{d}{n} \right\rceil$ ciphertexts. By following this approach, we can effectively optimize the computational cost for the secret key owner (102) and also the required bandwidth.

However, there is an increase in the computational cost for packing the values proportional to $O(d^2 n \lceil \log_t q \rceil)$ polynomial multiplications (element-wise multiplication between ciphertext and cleartext in [6]).

### Homomorphically solving the linear system (602)

There are several plausible approaches for solving a linear system of equations, which can be classified in two groups: methods obtaining an exact solution, and iterative approximate methods. Within the first type we have for example those based on LU decomposition and also Gauss elimination. For the second type, there is a wide range of algorithms like Jacobi, Gauss-Seidel, Relaxation and Gradient Descent.

Due to the finite precision arithmetic imposed by the cryptosystem, the second approach seems to better suit the purpose of the invention. Hence, in order to homomorphically compute one of the different iterative procedures, we have to tackle two main problems: the increase of the plaintext values after each iteration (we do not have an efficient method to reduce the plaintext values), and the absence of a method to compute real inverses.

The second problem can be mitigated by increasing the cardinality of the plaintext space for storing the corresponding scaled values, but this worsens the first problem. While the different operations can be perfectly computed in the encrypted domain (we have additions and multiplications in each iteration), the increasing cardinality of the plaintext values and the fact that we have to homomorphically compute several subsequent multiplications on the same ciphertext, imply a considerable increase on the cipher expansion and, consequently, a decrease on the efficiency. Therefore, as the sizes of the involved matrices in the linear systems are negligible with respect to the computational cost of encrypting the data, solving the linear systems in clear after decrypting them is the most efficient method and a good performance trade-off, as the most complex operation is offloaded to the untrusted domain without loss of accuracy.

We exemplify how these techniques could be applied for the next example implementation (where outsourcing their computation is more relevant): searching the exact solution of linear systems when dealing with ARIMA models.

## Description of a Secure Framework for Prediction based on Multivariate Linear Regression

First, we detail the different steps which have to be considered for a secure model computation (506). Next, some different alternatives for the secure prediction given a model (508) are introduced, and finally, the main flow for the secure search of the best model (402) for both the untrusted (104) and trusted (102) domains is given.

## Model Training

The bulk of the computation for the linear regression task corresponds to the calculation of the $\beta$ coefficients (linear regression model). The process can be divided in two main steps: 1) computation of $X^TX$, $X^Ty$, and 2) to obtain the solution for the linear system $\hat{\beta} = (X^TX)^{-1}X^Ty$.

We will consider the homomorphic execution of the first step on the untrusted domain, and the execution in clear of the step 2 on the trusted domain (the bulk of the computation is mainly located in the first step), having the following flow:

- The intermediate values $X^TX$ and $X^Ty$ are computed by the untrusted domain (104).
- The linear system $\hat{\beta} = (X^TX)^{-1}X^Ty$ is solved by the trusted domain (102).
- The obtained estimation $\hat{\beta}$ is encrypted by the trusted domain (102) and sent to the untrusted (104) domain which is the party in charge of evaluating the estimated scores with that model.
- Once the predictions are computed by the untrusted domain (104), the results are sent (116, 120) to the trusted (102) domain which can consider the computation finished or even calculate (lightweight) additional statistics which depend on these predictions.

Then, two rounds (604,704) are required in order to efficiently and securely compute both the estimated model and the predictions for the training dataset.

## Residuals computation

The residuals are one of the main results (the rest of the results can be easily derived or calculated from the residuals) which are required to evaluate the quality of a model. They are basically the difference among the right score value of a given sample and the corresponding estimated score value using the obtained model $\hat{\beta}$. Hence, we can compute the residuals of $N$ training samples as $y - X\hat{\beta}$.

Paying attention to the structure of the previous expression, it is clear that the most efficient way of homomorphically computing the residuals is resorting to the row-wise encoding previously introduced in this document. In this way, each prediction is performed with just one ciphertext multiplication between the encryption of each pre-processed sample and the encryption of the model $\hat{\beta}$.

However, once the estimated model has been computed in the untrusted domain, we have already outsourced the training dataset considering a column-wise encoding. This means that in order to have the data with a row-wise encoding instead of column-wise, we should homomorphically change the dataset structure or send it again with the right encoding for the efficient prediction.

In order to transform the dataset from a column-wise to a row-wise encoding, $N$ new ciphertexts have to be calculated, where each one encrypts a different row of $X$. This implies to use $d$ masks and automorphisms to obtain the right values from each ciphertext, together with a relinearization step (to change the secret key from $\kappa_i(s)$, where $i \in \mathbb{Z}_m^*$, to $s$), finally having a total cost of $O(Nd\lceil \log_t q \rceil n\log n)$ coefficient multiplications. Now, just considering the new encoding (row-encoding), the total cost of the prediction would be $O(Nn\log n)$ polynomial multiplications (where $n \geq d$).

If instead of homomorphically transforming the encrypted dataset, the trusted domain encrypts the whole dataset again, we have to reencrypt $N$ rows with a total cost of $O(Nn\log n)$ coefficient multiplications, which is even higher than the computational cost $O(Nd)$ of performing the prediction in clear.

Considering a column-wise encoding, we can homomorphically compute the estimated scores (consequently the residuals) as follows:

$$\sum_{i=0}^{d-1} col_i(X)\beta_i,$$

where we can have $d$ encryptions with the different coefficients in $\beta$ and to homomorphically calculate the residuals with a total cost of $O(ldn\log n) \approx O(Nd\log n)$ coefficient multiplications.

Therefore, although the row-encoding approach seems to be adequate when dealing with a small subset of samples for prediction, when this number increases (in this case, we work with the whole training dataset which is already in the untrusted domain), the total computational cost and bandwidth for the trusted domain clearly does not compensate the cost of performing the operations in clear, and the column-wise encoding keeps as the best solution.

**Variants for predicting scores**

Once the model $\hat{\beta}$ is available (506, 507), the user could provide new samples and we would have to be able to obtain the corresponding score estimates.

We have three possible approaches for computing this prediction (404):

- When the model is known by the trusted party and the number of samples to be evaluated is not very high, outsourcing the computation is slower than just computing the prediction in clear because we have a total computational cost of $O(d)$ coefficient multiplications for each sample.

- When the model is already encrypted in the untrusted domain (similar to row-wise encoding) and the number of samples for predicting is not very high, the most efficient process would be to independently encrypt in a different ciphertext each sample. Next, the scalar product can be implemented by means of as many ciphertext multiplications as the number of different samples, thus having a computational cost for each sample of $O(n \log n)$ for both the encryption and the outsourced computation ($n \geq d$).

- Finally, as already discussed, when the number of samples to be evaluated increases, the most efficient method is to resort to the column-wise encoding of the dataset.

One of the main differences between the second and third one methods relies on how the model $\hat{\beta}$ is encrypted. For the first one, all the coefficients of the model are pre-processed and encrypted in the same ciphertext. However, for the last one, the computation needs to have all the coefficients in a different ciphertext. Although we can resort to the use of masks and automorphisms to homomorphically unpack the model in several ciphertexts, the computational cost can be considerably reduced avoiding this unpacking process for the last method; of course, having the corresponding increase on cipher expansion by a factor of $d$.

**Stepwise Linear Regression**

The stepwise regression (402) enables to automatically find the model which achieves the best fit for the chosen data; the process can be briefly described as follows:

- First, we choose the initial model to start the stepwise process (502).

- Next, in each step, several new candidate models are evaluated (506, 508). If one of the models outperforms the current model, we update the model considering the best candidate.

- This process is repeated until all the models have been evaluated or we have achieved a predefined maximum number of steps (512).

In order to measure which is the model with the best fit, several statistics can be applied, being one of the most used the AIC (Akaike's Information Criteria): $AIC = -2\ln(L) + 2K$, where $L$ is the maximum likelihood and $K$ the number of parameters of the model. For the present case, a measure of the AIC may be used in terms of the residuals as $AIC = N\ln(RSS/N) + 2K$, being $RSS$ the residual sums of squares.

These statistics have to be able to measure how well the obtained model fits the data, but also they have to take into account the complexity of the model, introducing a penalty for those models which have more explanatory variables (Occam's razor).

Typically, different strategies can be considered for the stepwise regression, depending on both the initial model and the models which are considered as candidates in each step. Hence, we can have: a) the full model as the initial model and in each step we have to analyze which variable should be removed, b) the simplest model as the initial model and in each step we have to analyze which variable should be added, and c) to analyze in each step which variable could be added or removed from the model.

These methods imply to calculate and evaluate a different model $\hat{\beta}$ for each different combination of features. As all the models can be independently calculated, this task is highly parallelizable and then, amenable to be outsourced to the untrusted domain.

Next, we explain how the computation of the different models can be outsourced.

**Stepwise Regression in the Untrusted Domain**

As we have previously discussed, in the stepwise regression algorithm we have to calculate and evaluate several models in each step. For the linear regression, this is basically to solve the corresponding linear system $X^T X \hat{\beta}$ = $X^T X$ which is associated with the different models.

Hence, as in the computation of one model, the hardest part is to calculate both $X^T X$ and $X^T y$. However, if we consider those models whose variables are already defined in the full model (with all the variables), the different linear systems can be defined in terms of the full linear system, just by discarding the corresponding rows and columns associated with the removed variables.

Then, the trusted party can easily obtain the corresponding linear systems in each step (because it already knows the full linear system), and as the solution of linear systems is a difficult task to perform in the encrypted domain, it can be done by the trusted domain. Finally, those calculated models can be outsourced (and hence efficiently parallelized) to allow the untrusted domain to compute the different residuals.

However, although the solution of each linear system is considerably efficient comparing with the rest of the operations, as the number of linear systems which have to be solved can be very high (at the worst case we have to solve in each step $d$ linear systems of size $d \times d$, hence $O(d^4)$ with LU decomposition), this task can become the bottleneck of the stepwise regression.

In this way, to find a method to efficiently deal in the untrusted domain with the solution of these linear systems would allow to efficiently parallelize all the operations.

**Encrypted Block Matrix Inversion**

Is it herein explained how to solve the problem of inverting a matrix when we already know the inverse of a matrix which can be defined as a correction of the first one.

First, we include the Woodbury matrix identity:

$$(A + UCV)^{-1} = A^{-1} - A^{-1}U(C^{-1} + VA^{-1}U)^{-1}VA^{-1},$$

where $A$, $U$, $C$ and $V$ have a size of, respectively, $d \times d$, $d \times k$, $k \times k$ and $k \times d$.

Hence, thanks to this identity, wherever we can express a matrix as $A + UCV$ and we know $A^{-1}$, the inverse of the matrix can be computed resorting to the Woodbury identity. However, we still have to be able to compute $(C^{-1} + VA^{-1}U)^{-1}$ which, although easier than inverting a $d \times d$ matrix when $k < d$, it is still hard to compute homomorphically.

This inconvenience can be resolved paying attention to the particular task, where all the models that have to be evaluated in each step are the result of a rank one update of the previous linear system. Therefore, when we particularize the previous identity to $k = 1$, we have the Shermann-Morrison formula:

$$(A + uv^T)^{-1} = A^{-1} - \frac{A^{-1}uv^T A^{-1}}{1 + v^T A^{-1}u},$$

where $u$, $v$ are column vectors of length $d$.

The above equation enables to perform row (column) updates to the inverse of $A$ just by considering a unit vector $u$ ($v$).

Finally, in the present case the matrix to invert is $X^T X$ and that the column is added or removed from $X$. Thus, the following is obtained:

$$(Xu)^T(Xu) = \begin{pmatrix} X^t X & X^T u \\ u^T X & u^T u \end{pmatrix}.$$

In this case, we have to resort to a matrix block inversion lemma from which we can obtain the two previous Woodbury and Shermann-Harrison identities. Let two matrices $A$ and $A^{-1}$ as

$$A = \begin{pmatrix} A_{11} & A_{12} \\ A_{21} & A_{22} \end{pmatrix}$$

and

$$A^{-1} = W = \begin{pmatrix} W_{11} & W_{12} \\ W_{21} & W_{22} \end{pmatrix}.$$

The blocks of $A^{-1}$ are:

$$W_{11} = (A_{11} - A_{12}A_{22}^{-1}A_{21})^{-1},$$

$$W_{12} = -A_{11}^{-1}A_{12}W_{22},$$

$$W_{21} = -W_{22}A_{21}A_{11}^{-1},$$

$$W_{22} = (A_{22} - A_{21}A_{11}^{-1}A_{12})^{-1},$$

where considering the case with $X^TX$, we have

$$W_{11} = (X^TX - X^Tucu^TX)^{-1},$$

$$W_{12} = -c(X^TX)^{-1}X^Tu,$$

$$W_{21} = -cu^TX(X^TX)^{-1},$$

$$W_{22} = c.$$

with $c = \dfrac{1}{u^Tu - u^TX(X^TX)^{-1}X^Tu}.$

Resorting to the Shermann-Morrison formula, $W_{11}$ can be:

$$W_{11} = (X^TX)^{-1} + c(X^TX)^{-1}X^Tuu^TX((X^TX)^{-1})^T.$$

Hence, from the previous expressions for $W_{ij}$ we can add columns to $X$, and consequently, to calculate the associated inverse. If the column is added to a position $j$ in the matrix $X$, after calculating $W$, both the $j$ row and $j$ column of $W$ have to be permutated to the last row and last column.

In order to remove the $j$ column, we consider $W$ as the known matrix and the $j$ row and column are permutated to the last row and column. Afterwards we compute $W_{11} - \dfrac{W_{12}W_{12}^T}{c}.$

**Homomorphic Tools**

The objective is to explain how we can homomorphically evaluate the operations previously presented for both the addition and deletion of one dimension in the models.

First, for the case of adding one column, if we look at the expressions for **W**, we can see that all the operations are basically multiplications and additions, and just the calculation of c introduces additional problems. Thus, we will avoid the computation of *c*, and the untrusted domain will provide 1/*c* and also the result scaled by 1/*c,* in such a way that the trusted domain is the party which has to invert the scaling (which can be done very efficiently because *c* is a scalar value).

Now, depending on the allowed complexity for the algorithms performed by the untrusted party, several results can be provided.

For the simpler algorithm, the trusted domain encrypts the $d^2$ values of the matrix $(\boldsymbol{X}^T\boldsymbol{X})^{-1}$ in a different ciphertext, hence having $d^2$ ciphertexts ($O(d^2 n\log n)$). Now, the untrusted domain can homomorphically compute $\dfrac{W_{12}}{c}$, $\dfrac{W_{21}}{c}$ and $\dfrac{1}{c}$. After decryption, the trusted domain can reverse the scalings, and finally, to calculate the product $(\boldsymbol{X}^T\boldsymbol{X})^{-1}\boldsymbol{X}^T\boldsymbol{u}\boldsymbol{u}^T\boldsymbol{X}((\boldsymbol{X}^T\boldsymbol{X})^{-1})^T$ in order to have $\boldsymbol{W}_{11}$.

For removing a column, if we consider that we have the same $d^2$ ciphertexts, the expression $$cW_{11} - W_{12}W_{12}^T$$ can be homomorphically evaluated, and the trusted domain only has to reverse the scaling by *c*.

The main drawbacks of the previous solutions are that the $d^2$ ciphertexts can be considerably reduced (trying to pack the maximum matrix values in the same ciphertext), and that the trusted party decrypts an intermediate result (for the case of adding one column), thus some additional computations have to be applied in order to obtain the models. All these problems can be solved if we use some tools as automorphisms and relinearizations [6].

After one multiplication between two matrices which are packed, the results are encoded in the first coefficient of the NTT. In this way, the use of automorphisms enables to repack the obtained values as they were before the matrix multiplication. Additionally, when performing products of column vectors with row vectors, the NTT packing is not the best option as its structure is more adequate to perform scalar products. In this case the automorphisms allow us to divide a ciphertext in as many ciphertexts as values are packed in the original ciphertext, so we can homomorphically calculate the resulting matrix without an intermediate decryption.

Hence, resorting to their use, we can pack the values of the matrix $(\boldsymbol{X}^T\boldsymbol{X})^{-1}$ in less ciphertexts, and also to readapt the results after one matrix multiplication to allow for more consecutive matrix operations. Finally enabling to provide the encryption of the models instead of an intermediate result (the correction of the scaling still has to be performed).

An example of Secure Prediction based on the use of time-series and ARIMA models

Another of the possible embodiments for obtaining an encrypted model 507 or an encrypted prediction 509 is based on ARIMA modelling as a basic primitive (homomorphic computation 602 and 702; and also an interactive process between client and server 604 and 704). The following paragraphs exemplify how this process is implemented in the present invention.

**ARIMA model**

We define an ARMA(*p*, *q*) process {$X_t$} as:

$$X_t - \phi_1 X_{t-1} - \cdots - \phi_p X_{t-p} = Z_t + \theta_1 Z_{t-1} \ldots + \theta_q Z_{t-q},$$

where {$X_t$} is a stationary process, the elements of {$Z_t$} are independent Gaussian variables with variance $\sigma^2$, and the polynomials $\phi(z) = 1 - \phi_1 z - \ldots - \phi_p z^p$ and $\theta(z) = 1 + \theta_1 z + \ldots + \theta_q z^q$ have no common factors.

Now, introducing the backward shift operator *B* with properties $B^j X_t = X_{t-j}$ and $B^j = Z_t = Z_{t-j}$ with $j \in Z$, we can define an ARIMA(*p*, *d*, *q*) process {$X_t$} as

$$Y_t = (1 - B)^d X_t,$$

where $\{Y_t\}$ is a causal ARMA(p, q) process and d is a nonnegative integer.

Therefore, the typical procedure for using ARIMA models in prediction comprises finding the ARIMA model with the best fit to the particular time series (step 402). In order to do this, a systematic approach is to find those values of *p*, *q* and *d* which provide the statistical model with the best quality for the given time series.

Some of the typical measures considered for this purpose are, among others, AIC and variants like for example AICc, FPE (Final Prediction Error) criterion and BIC.

The selected model is the one with the minimum value for the chosen criteria. Additionally, these measures introduce a penalty factor to those models with too many parameters, meant to avoid overfitting, and the subsequent deterioration in prediction.

In addition to the ARMA process, there are two particular cases of ARIMA processes which are well known and that we are going to specifically deal with under encryption: AR(*p*) (Auto-Regressive) processes where $\theta(z) = 1$ and MA(*q*) (Moving-Average) processes where $\phi(z) = 1$ (both considering *d* = 0). For more details on ARIMA models, we refer to [17].

## Polyphase Decomposition for more efficient Encryption/Decryption

A common step needed for the computation of the different ARIMA models is the calculation of the autocovariance matrix of the time series. For a time-series $\{X_t\}$ composed of *n* values, for which the corresponding process is stationary, we compute the autocovariance matrix as a linear convolution operation, where we can therefore resort to the use of fast algorithms (like radix-2 and radix-4) we have a reduced computational cost of $O(n\log_2 n)$ elemental products.

If we now look at the encryption and decryption algorithms of the chosen FV cryptosystem, if we consider that the whole time series is encrypted in only one ciphertext, the corresponding computational cost of the encryption is also $O(n\log_2 n)$. Therefore, a straightforward application of the cryptographic tools previously explained does not impose any change in terms of the order of the computational cost, as encryption and decryption have the same complexity as the fast convolution.

We can further improve on the performance for the client by considering another strategy for the homomorphic computation of the ARIMA model. For this, we resort to techniques for a cleverer encryption and decryption step that we detail in the following paragraphs.

We represent the time-series as a signal *x*[*l*] (with *l* = 0*, ..., n* - 1), or equivalently in polynomial form as the coefficients of a polynomial $x(z) = \sum_{i=0}^{n-1} x_i z^i$. We also denote as $x^{(i)}(z) = \sum_{d=0}^{\frac{n}{m}-1} x[md - i]z^d$ the *i*-th component of the polyphase decomposition in *m* components of *x*(*z*):

$$x(z) = \sum_{i=0}^{m-1} x^{(i)}(z^m)z^i.$$

Now, if the user encrypts each polyphase component in a different ciphertext, ending up with *m* ciphertexts (with $\underline{l} = n/m$ samples each ciphertext), it implies a computational cost for encryption of $O(n \log_2 l)$ elemental products. If we also consider the number of encrypted samples per ciphertext as a constant (comparing to the length *n* of the time series), we have a computational cost of $O(n)$ elemental products.

Next, the outsourced service in the untrusted domain can resort to upsampling techniques in such a way that it obtains a unique ciphertext with the whole time series:

$$c = \sum_{i=0}^{m-1} z^i c^{(i)}(z^m),$$

where $c^{(i)}(z)$ represents the encryption of the *i*-th polyphase component.

Now, in order to compute the autocorrelation, we reverse the encrypted time series and multiply the two ciphertexts:

$$c^{cov} = c^{ref}c,$$

where $c^{ref}$ is computed resorting to a relinearization primitive.

Finally, the third party homomorphically divides the corresponding $m$ polyphase components of the encrypted result in $m$ different ciphertexts. Hence, having a computational cost for decryption of $O(n)$ elemental products, analogous to encryption. So as to compute the different polyphase components, we compute $z^{-i}c^{cov}$ for $i = 0, ..., m - 1$, followed by a downsampling by $m$ and a relinearization step for each one (for more details on how to homomorphically compute the downsampling operation, we refer to [6]).

Proposed procedures for homomorphically computing (602) the different versions of an ARIMA model (that is, AR, MA, ARMA and ARIMA) are hereinafter explained in detail.

**Homomorphic AR (602)**

For a purely autoregressive model we can obtain a set of equations called Yule-Walker equations:

$$\widehat{\boldsymbol{\phi}} = (\widehat{\phi}_1, ..., \widehat{\phi}_p)^T = \widehat{\boldsymbol{R}}_p^{-1} \widehat{\boldsymbol{\rho}}_p$$

and

$$\widehat{\sigma}^2 = \widehat{\gamma}(0)(1 - \widehat{\boldsymbol{\rho}}_p^T \widehat{\boldsymbol{R}}_p^{-1} \widehat{\boldsymbol{\rho}}_p),$$

where $\widehat{\boldsymbol{\rho}}_p = (\widehat{\rho}(1), ..., \widehat{\rho}(p))^T = \dfrac{\widehat{\gamma}_p}{\widehat{\gamma}(0)}$, and being $\widehat{\gamma}$ a vector with the sample covariances and $\widehat{R}_p$ the sample auto-correlation matrix of order $p$.

Additionally, for a large sample of an AR($p$) process, the estimator satisfies $\widehat{\phi} \approx N(\varPhi, n^{-1}\sigma^2 \varGamma_p^{-1})$, being $\varGamma_p$ the autocovariance matrix of order $p$. Considering that the assumption of order $p$ is correct, we can also use the asymptotic distribution of $\widehat{\phi}_p$ (for a large-sample) to derive confidence intervals for the true vector $\phi_p$.

Therefore, in order to obtain the estimators of an AR($p$) process, we only have to solve a linear system with a square matrix of size $p \times p$. Actually, it can be computed more efficiently by resorting to the Levinson-Durbin recursion (see [17]) in such a way that we can successively solve the previous equations for increasing $p$.

The Levinson-Durbin recursion runs in $O(p^2)$ time; as are considering that $n \gg p$, the complexity of the algorithm is mainly determined by the encryption and decryption primitives ($O(n)$). Therefore, the third party homomorphically computes the autocovariance (autocorrelation) function (which is the most costly operation), and afterwards, the original user locally decrypts the desired values and computes the Durbin-Levinson recursion.

**Homomorphic MA (602)**

For a purely moving-average process we can resort to the innovations algorithm (it can be used whenever the considered process is a zero-mean series and $\mathbb{E}(|X_t|^2) < \infty$ ) where the coefficients $\{\theta_{n1}, ..., \theta_{nn}\}$ can be computed recursively as follows:

$$v_0 = \kappa(1,1),$$

$$\theta_{n,n-k} = v_k^{-1}\left(\kappa(n + 1, k + 1) - \sum_{j=0}^{k-1} \theta_{k,k-j}\theta_{n,n-j}v_j\right),$$

where $\kappa(i,j) = E(X_i X_j)$, $0 \le k < n$ and

$$v_n = \kappa(n + 1, n + 1) - \sum_{j=0}^{n-1}(\theta_{n,n-j})^2 v_j.$$

If in the previous equations we consider a sample autocovariance function instead of $\kappa(i,j)$, we obtain a set of estimators $\widehat{\theta}_m = (\widehat{\theta}_{m1}, ..., \widehat{\theta}_{mm})^T$ and white noise variances $\widehat{v}_m$, in such a way that the estimated MA(m) model for the time series satisfies:

$$X_t = Z_t + \hat{\theta}_{m1}Z_{t-1} + \cdots + \hat{\theta}_{mm}Z_{t-m},$$

with $\{Z_t\}$ independent Gaussian variables with mean zero and variance $\hat{v}_m$.

When $\{X_t\}$ is an invertible MA(q) process with $\mathbb{E}(Z_t{}^4) < \infty$, the estimates obtained with the innovations algorithm have the following property [17]: for $n \to \infty$ and $m(n)$ a sequence of positive integers satisfying $m(n) \to \infty$ and $n^{-1/3}m(n) \to 0$, we have that for each $k = 1, 2, ...$

$$n^{\frac{1}{2}}(\hat{\theta}_{m1} - \theta_1, \hat{\theta}_{m2} - \theta_2, ..., \hat{\theta}_{mk} - \theta_k)^T$$

converges to a multivariate normal distribution with mean a vector of zeroes and covariance matrix **A**, where each element verifies

$$a_{i,j} \sum_{r=1}^{min(i,j)} \theta_{i-r}\theta_{j-r}.$$

Therefore, thanks to this result we can find confidence intervals for the coefficients $\theta$ as previously explained for the coefficients $\phi$.

Now, analogously as for the proposed approach for encrypted AR, the outsourced untrusted service homomorphically computes the sample autocovariance function. This results in a computational cost for the user for encryption and decryption of $O(n)$. After decryption, the user has to perform the innovations algorithm (with a computational cost of $O(q^2)$ for $n \gg q$) which has a computational cost negligible when compared with the computation of the autocovariance matrix.

**Homomorphic ARMA (602)**

The innovations algorithm can be also used for the ARMA model as follows: consider the relation $X_t = \sum_{j=0}^{\infty} \psi_j Z_{t-j}$ where $\psi_j = \theta_j + \sum_{i=1}^{min(j,p)} \phi_i \psi_{j-i}$, $j = 0, 1, ...$ and define $\theta_0 = 1$ and $\theta_j = 0$ for $j > q$. Now, we replace the $\psi_1, ..., \psi_{p+q}$ values with the estimates $\hat{\theta}_{m,1}, ..., \hat{\theta}_{m,p+q}$ obtained from the innovations algorithm, and we solve the following equations for both $\phi$ and $\theta$

$$\hat{\theta}_{mj} = \theta_j + \sum_{i=1}^{min(j,p)} \phi_i \hat{\theta}_{m,j-i},$$

with

$$j = 1, ..., p + q.$$

In order to do this, we first obtain $\hat{\phi}$ from the last q equations, and afterwards, $\hat{\theta}$ can be easily derived (for more details see [17]).

Again, as $n \gg p + q$, the solution of the previous equations has a negligible computational cost compared with the computational cost of obtaining the covariance matrix. Therefore, as previously explained, we resort to the untrusted service to homomorphically compute this matrix. Once the user has received the covariance values, the corresponding ARMA estimates can be efficiently computed.

**Interactive solution for the Hannan-Rissanen Algorithm (604))**

Additionally, if we allow some intermediate communication rounds between the secret key owner and the third party, we could homomorphically compute the Hannan-Rissanen algorithm for the computation of the ARMA(p, q) model. We briefly sketch the proposed secure process:

- Firstly, the outsourced service homomorphically computes the sample covariance matrix and sends it to the secret key owner. Next, the secret key owner uses the Yule-Walker equations (or Levinson-Durbin recursion) for obtaining an AR(m) model with $m > max(p, q)$, where the estimated residuals can be obtained as

$$\hat{Z}_t = X_t - \hat{\phi}_{m,1}X_{t-1} - \cdots - \hat{\phi}_{m,m}X_{t-m} \ \text{ with } t = m + 1, \ldots, n.$$

- Afterwards, the secret key owner sends the estimates $\hat{\phi}$ to the untrusted service, which can homomorphically compute the estimated residuals $\hat{Z}_t$ thanks to the previous expression. Now, resorting to the least squares linear regression of $X_t$ over $X_{t-1}, \ldots, \hat{Z}_{t-1}, \ldots, \hat{Z}_{t-q}$ with $t = m + 1 + 1, \ldots, n$, we can interactively compute the parameters of the ARMA process with the Hannan-Rissanen estimator $\hat{\beta} = (Z^T Z)^{-1} Z^T X_n$, being $X_n = (X_{m+1+q}, \ldots, X_n)^T$ and

$$Z = \begin{pmatrix} X_{m+q} & X_{m+q-1} & \cdots & X_{m+q+1-p} & \hat{Z}_{m+q} & \hat{Z}_{m+q-1} & \cdots & \hat{Z}_{m+1} \\ X_{m+q+1} & X_{m+q} & \cdots & X_{m+q+2-p} & \hat{Z}_{m+q+1} & \hat{Z}_{m+q} & \cdots & \hat{Z}_{m+2} \\ \vdots & \vdots & \cdots & \vdots & \vdots & \vdots & \ddots & \vdots \\ X_{n-1} & X_{n-2} & \cdots & X_{n-p} & \hat{Z}_{n-1} & \hat{Z}_{n-2} & \cdots & \hat{Z}_{n-q} \end{pmatrix}.$$

In this case, the untrusted service homomorphically computes $Z^T Z$ and $Z^T X_n$ and sends them to the secret key owner, who finally obtains $\hat{\beta}$.

In order to adapt the different vectors and to homomorphically compute the different matrix products, we resort to the same techniques we presented for the linear regression.

## Homomorphic ARIMA (602)

In order to homomorphically obtain the better ARIMA($p,d,q$) model for the input dataset, the definition of the ARIMA processes is considered.

For the considered set of possible d values, we homomorphically obtain the corresponding causal ARMA(p,q) model as $Y_t = (1 - B)^d X_t$ and we apply the previously discussed techniques for each one of the different obtained processes for each plausible $d$.

This method is commonly known as differencing, and it basically implies recursively applying $X_t \leftarrow X_t - X_{t-1}$ as many times as the desired d value. This operation can be easily computed in the encrypted domain as a ciphertext sustration where one of the ciphertexts has been previously shifted (see [6]). Consequently, all the presented methods for each different process obtained for a different d value can be applied.

## Description of a Secure Framework for ARIMA Model Prediction

It is now described the main flow to securely fit an ARIMA model given an input dataset with a set of time series. Although it has already been described the different strategies which can be followed in order to securely fit an ARIMA model, one of the main assumptions to be considered is not valid for any type of input dataset. Mainly that the length of the sequences is very high.

When this assumption is correct, encrypting the whole sequence in only one ciphertext is not the best idea as its computational cost has the same order as the estimation of the ARIMA model in clear. To address this issue, in one embodiment the present invention uses a polyphase-decomposition method which helps to reduce the computational cost from the point of view of the secret key owner.

It is also possible to work with data which does not satisfy this requirement. The inconveniences caused by the estimation of models from sequences which are not long enough to efficiently use the already presented methodologies are now addressed.

First, we detail how we can work in parallel with different sequences, helping to increase the efficiency of the scheme and reducing the cipher expansion.

## Time Series Batching

As we cannot take advantage of working with very long sequences, the implemented algorithms consider a totally different (and also much more intuitive) way of encoding the time series values. In this case, each value is encrypted in a different ciphertext (usually the zero-degree coefficient of the polynomial).

This encoding enables to work in the untrusted domain as if we were working with an algorithm in clear domain, that is, we can multiply and add two different values doing the same operation with the corresponding ciphertexts.

If we carefully describe the algorithm in terms of additions and multiplications, this approach is much more amenable to deal with. However, as counterpart, the cipher expansion is considerably higher. This is the main reason to introduce some batching/unbatching techniques to reduce this increase on cipher expansion.

The main idea is to encode in each ciphertext as many values from different time series as possible, in such a way that when we perform an ARIMA fit over the ciphertexts, we are doing in parallel the same ARIMA fit for all the time series which are packed. The required techniques were previously explained as a pre-/post-processing before/after encryption/decryption.

The batching process works as follows:

- We pack in one vector different values coming from different time series (302).
- An NTT is computed to this vector (302).
- The pre-processing for enabling a cyclic convolution is applied to the vector (302).
- The vector is encrypted (304).

Now, all the ciphertext additions and multiplications are equivalent to element-wise additions and multiplications of the encrypted vectors.

The unbatching process works as follows:

- The vector is decrypted (312).
- The post-processing for enabling a cyclic convolution is applied to the vector (314).
- The NTT is reversed (314).
- We unpack the different values which are encoded in the vector (314).

**Fit ARIMA model (402)**

Considering very long time series, the cost of solving a linear system is much smaller than obtaining the matrices and vectors of those linear systems. That was the main reason to outsource the computation of the covariance matrices and to leave in the trusted domain the solutions of these systems.

However, this is no longer true if that assumption is not acceptable, being the bulk of the computation both parts of the process: to calculate the associated matrices and vectors and also to solve the linear system.

Although in general, solving linear systems is not an efficient task in the encrypted domain, as most of the models which are considered when fitting an ARIMA model do not have a very high order, this task becomes feasible. In this way, the approach we present here outsources most of the operations which are involved in fitting the ARIMA model, being the trusted domain the responsible of refreshing the ciphertexts (as a somewhat homomorphic encryption scheme can only perform a bounded number of consecutive operations over the same ciphertext) and apply some scalings to adapt the ciphertext's content for the next stage of the secure process.

The strategy which we have chosen to securely fit ARIMA models is the Hannan-Rissanen algorithm, so the process can be divided in three main steps: 1) computation of AR models, 2) residual computation, and 3) finding the corresponding Hannan-Rissanen estimator. The main flow of a batched ARIMA fit would be:

- Given as many encryptions (305) as samples has the considered time series, the autocovariance matrix is homomorphically calculated. As the orders of the ARIMA models to be computed are not very high, if the cryptosystem supports depth enough, we can also homomorphically solve the linear system and obtain the corresponding residuals.

- The trusted domain is the responsible of refreshing the ciphertexts and to reencrypt the corresponding values of the linear system for the Hannan-Rissanen estimator.

- Finally, the untrusted domain can obtain the Hannan-Rissanen estimator and return the corresponding results for different types of ARIMA models and all the batched time series; being the trusted party the responsible of choosing the model which best fits the sequences.

A clear advantage of the proposed flow is that we are parallelizing both the fitting of several time series to a particular model and the computation of different ARIMA models for each time series. Additionally, just two rounds of communication trusted-untrusted are required (604).

**Exact Solutions for Small Linear Systems**

To solve the corresponding linear systems we follow the strategy considered by [13] where the authors resort to the use of Cramer's rule calculating the determinants via minors:

$$A^{-1} = \frac{1}{det(A \, \mathrm{Adj}(A))}$$

Although the computational cost of this approach grows very fast with the size of the system ($O(d!)$) with $d$ the number of variables), to fit ARIMA models the required number of variables is usually small and thus this approach enables to efficiently outsource the computation.

**Prediction (404)**

Predictions are calculated following the expression of the corresponding ARIMA model. The untrusted domain needs to know both the training sequence and their corresponding residuals. As the expression which obtains the predictions applies multiplications over the same values, depending on the length of the prediction sequence, an interaction with the trusted domain is required to refresh the ciphertexts (we could also resort to a Recryption Oracle, e.g., SGX (202)). This process (steps 2 and 3) is repeated as many times as required to have all the forecasts:

- The trusted domain packs (302) and encrypts (304) the residuals, time series and coefficients of each model.
- The untrusted domain homomorphically evaluates (702) as many prediction values as the depth of the cryptosystem enables.
- The trusted domain (102) (or an available Recryption Oracle (202)) recrypts the obtained subset of prediction values in the current round.

As we are packing values of different time series in the same ciphertext, the untrusted domain cannot know the type of ARIMA model which is being considered for prediction. In this way, the trusted party chooses the ARIMA model with the maximum order and for the rest of time series those coefficients are set to zero when encrypting.

**Claims**

1. A method for secure outsourced prediction, comprising:

   encrypting (304), by a first entity (102), input data (301) using homomorphic encryption to obtain encrypted input data (305);
   transmitting (306) the encrypted input data (305) to a second entity (104);
   computing (402), by the second entity (104), an encrypted model for prediction (403);
   computing (308), by the second entity (104), an encrypted prediction result (309) for the input data (301) using the encrypted model for prediction (403) and the encrypted input data (305);
   transmitting (310) the encrypted prediction result (309) to the first entity (102);
   decrypting (312), by the first entity (102), the encrypted prediction result (309) using homomorphic encryption, obtaining (316) a prediction result (317).

2. The method of claim 1, wherein the computing of the encrypted model for prediction (403) comprises a homomorphic computation (602) by the second entity (104), using the encrypted input data (305).

3. The method of claim 1, wherein the computing of the encrypted model for prediction (403) comprises an interactive computation (604) between the second entity (104) and a trusted module (202) of the second entity (104) that can be accessed by the first entity (102).

4. The method of claim 1, wherein the computing of the encrypted model for prediction (403) comprises an interactive computation (604) between the first entity (102) and the second entity (104).

5. The method of any preceding claim, wherein the computing (402) of the encrypted model for prediction (403) comprises determining (514) the best available model for prediction among a set of available models.

6. The method of any of claims 1 to 5, wherein the computing (308) of the encrypted prediction result (309) comprises a homomorphic computation (702), by the second entity (104), using the encrypted input data (305).

7. The method of any of claims 1 to 5, wherein the computing (308) of the encrypted prediction result (309) comprises an interactive computation (704) between the second entity (104) and trusted module (202) of the second entity (104) that can be accessed by the first entity (102).

8. The method of any of claims 1 to 5, wherein the computing (308) of the encrypted prediction result (309; 329) comprises an interactive computation (704) between the first entity (102) and the second entity (104).

9. The method of any preceding claim, wherein the second entity (104) comprises at least one server.

10. A system for secure outsourced prediction, comprising:

a first entity (102) comprising an encryption module (110) configured to encrypt (304) input data (301) using homomorphic encryption to obtain encrypted input data (305) and a communication module (116) configured to transmit (306) the encrypted input data (305) to a second entity (104); and
the second entity (104), comprising:

a processing module (118) configured to compute (402) an encrypted model for prediction (403), and compute (308) an encrypted prediction result (309) for the input data (301) using the encrypted model for prediction (403) and the encrypted input data (305);
a communication module (120) configured to transmit (310) the encrypted

prediction result (309) to the first entity (102);

wherein the first entity (102) further comprises a decryption module (112) configured to decrypt (312) the encrypted prediction result (309) using homomorphic encryption, and obtain (316) a prediction result (317).

11. The system of claim 10, wherein the processing module (118) of the second entity (104) is configured to homomorphically compute (602) the encrypted model for prediction (403) using the encrypted input data (305).

12. The system of claim 10, wherein the second entity (104) further comprises a trusted module (202) that can be accessed to by the first entity (102); and wherein the processing module (118) of the second entity (104) is configured to interactively compute (604) the encrypted model for prediction (403) with the trusted module (202) or with the first entity (102).

13. The system of any of claims 10 to 12, wherein the processing module (118) of the second entity (104) is configured to homomorphically compute (602) the encrypted prediction result (309) using the encrypted input data (305).

14. The system of any of claims 10 to 12, wherein the second entity (104) further comprises a trusted module (202) that can be accessed to by the first entity (102); and wherein the processing module (118) of the second entity (104) is configured to interactively compute (604) the encrypted prediction result (309) with the trusted module (202) or with the first entity (102).

15. The system of any of claims 10 to 14, wherein the first entity (102) is a trusted component comprising a client device and the second entity (104) is an untrusted component that comprises at least one server.

100

Client device
(Trusted) 102

106

User

108 User Interface

Prediction result 112

110 Encryption module {pk}

Decryption module {sk}

Unencrypted input data

Encrypted input data

Encrypted prediction

114 Client storage module

116 Client Communication module

Encrypted input data

Encrypted prediction

Server
(Untrusted) 104

118 Processing module {pk,ek}

120 Server communication module

122 Server storage module

FIG. 1

100

Client device
(Trusted) 102

106

User

108 User Interface

Prediction result 112

110 Encryption module {pk}

Decryption module {sk}

Unencrypted input data

Encrypted input data

Encrypted prediction

114 Client storage module

116 Client Communication module

Encrypted input data

Encrypted prediction

Server
(Untrusted) 104

202 Trusted module

118 Processing module {pk,ek}

120 Server communication module

122 Server storage module

FIG. 2

301
INPUT DATA

300

302
CLIENT PREPROCESSES THE INPUT DATA

303
PREPROCESSED INPUT DATA

304
CLIENT ENCRYPTS THE PREPROCESSED INPUT DATA

305
ENCRYPTED INPUT DATA

306
CLIENT SENDS THE ENCRYPTED INPUT DATA TO SERVER

308
SERVER CALCULATES AN ENCRYPTED PREDICTION RESULT USING THE ENCRYPTED DATA

309
ENCRYPTED PREDICTION RESULT

310
SERVER SENDS ENCRYPTED PREDICTION RESULT TO CLIENT

312
CLIENT DECRYPTS THE PREDICTION RESULT

314
CLIENT POSTPROCESSES THE PREDICTION RESULT

316
CLIENT OBTAINS THE PREDICTION RESULT

317
PREDICTION RESULT

318
CLIENT STORES THE PREDICTION RESULT

FIG. 3A

300

301

INPUT DATA

304
CLIENT ENCRYPTS THE INPUT DATA

305
ENCRYPTED INPUT DATA

306
CLIENT SENDS THE ENCRYPTED INPUT DATA TO SERVER

308
SERVER CALCULATES AN ENCRYPTED PREDICTION RESULT
USING THE ENCRYPTED DATA

309
ENCRYPTED PREDICTION
RESULT

310
SERVER SENDS ENCRYPTED PREDICTION RESULT TO CLIENT

312
CLIENT DECRYPTS THE PREDICTION RESULT

316
CLIENT OBTAINS THE PREDICTION RESULT

317
PREDICTION RESULT

318
CLIENT STORES THE PREDICTION RESULT

FIG. 3B

308

402
SERVER COMPUTES A MODEL FOR PREDICTION

403
ENCRYPTED MODEL
FOR PREDICTION

305
ENCRYPTED INPUT DATA

404
SERVER EXECUTES PREDICTION PRIMITIVE USING THE
ENCRYPTED DATA INPUT AND THE COMPUTED MODEL

406
SERVER OBTAINS THE ENCRYPTED PREDICTION RESULT

ENCRYPTED PREDICTION
RESULT

309

FIG. 4

29

402

502

INITIALIZATION

K = 0
L = NUMBER OF MODELS TO EVALUATE

K = K + 1

506

SECURE MODEL COMPUTATION

507

ENCRYPTED
MODEL K

305

ENCRYPTED INPUT DATA

508

COMPUTE ENCRYPTED PREDICTION

509

ENCRYPTED PREDICTION

510

QUALITY MODEL COMPUTATION

512

TRUE

K < L

FALSE

514

BEST MODEL IS DETERMINED

403

ENCRYPTED MODEL
FOR PREDICTION

516

STORE BEST MODEL

FIG. 5

506

SECURE MODEL COMPUTATION

305

ENCRYPTED INPUT DATA

602

SERVER HOMOMORPHICALLY
COMPUTES THE MODEL

604

TWO PARTY COMPUTATION
BETWEEN SERVER AND CLIENT
RESOURCES

606

ENCRYPTED MODEL PARAMETERS

507

ENCRYPTED
MODEL K

608

STORE ENCRYPTED
MODEL K

FIG. 6

508

```
                    ENCRYPTED PREDICTION
```

702
```
   SERVER HOMOMORPHICALLY          TWO PARTY COMPUTATION        704
   CALCULATES THE PREDICTION      BETWEEN SERVER AND CLIENT
          VALUES                          RESOURCES
```

706
509
```
          ENCRYPTED PREDICTION VALUES              ENCRYPTED PREDICTION
```

```
          STORE ENCRYPTED        708
            PREDICTION
```

FIG. 7

EP 3 461 054 A1

**EUROPEAN SEARCH REPORT**

Europäisches Patentamt
European Patent Office
Office européen des brevets

Application Number

EP 17 38 2623

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 203 679 A1 (ABB SCHWEIZ AG [CH]) 9 August 2017 (2017-08-09) | 1-4,6-15 | INV. H04L9/00 |
| Y | * paragraphs [0045] - [0057]; figure 1 * | 5 | |
| X | THORE GRAEPEL ET AL: "ML Confidential: Machine Learning on Encrypted Data", 28 November 2012 (2012-11-28), INFORMATION SECURITY AND CRYPTOLOGY ICISC 2012, SPRINGER BERLIN HEIDELBERG, BERLIN, HEIDELBERG, PAGE(S) 1 - 21, XP047027299, ISBN: 978-3-642-37681-8 | 1-4,6-15 | |
| Y | sections 1 and 2; * abstract * | 5 | |
| Y | Fida K. Dankar: "Privacy Preserving Linear Regression on Distributed Databases", Transactions on Data Privacy, 1 April 2015 (2015-04-01), pages 3-28, XP055454014, Retrieved from the Internet: URL:http://www.tdp.cat/issues11/tdp.a215a15.pdf * sections 2.2 and 6.4 * | 5 | |

TECHNICAL FIELDS SEARCHED (IPC)

H04L

The present search report has been drawn up for all claims

| Place of search | Date of completion of the search | Examiner |
|---|---|---|
| Munich | 26 February 2018 | Billet, Olivier |

EPO FORM 1503 03.82 (P04C01)

EP 3 461 054 A1

## ANNEX TO THE EUROPEAN SEARCH REPORT
## ON EUROPEAN PATENT APPLICATION NO.

EP 17 38 2623

26-02-2018

| Patent document cited in search report | | Publication date | Patent family member(s) | | Publication date |
|---|---|---|---|---|---|
| EP 3203679 | A1 | 09-08-2017 | EP | 3203679 A1 | 09-08-2017 |
| | | | WO | 2017134269 A1 | 10-08-2017 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014138754 A1
- WO 2014137392 A1

**Non-patent literature cited in the description**

- **M. BARNI ; P. FAILLA ; R. LAZZERETTI ; A. R. SADEGHI ; T. SCHNEIDER.** Privacy-Preserving ECG Classification With Branching Programs and Neural Networks. *IEEE Transactions on Information Forensics and Security,* June 2011, vol. 6 (2), 452-468
- **N. DOWLIN ; R. GILAD-BACHRACH ; K. LAINE ; K. LAUTER ; M. NAEHRIG ; J. WERNSING.** CryptoNets: Applying Neural Networks to Encrypted Data with High Throughput and Accuracy. *ICML,* 2016, 201-210
- **PENGTAO XIE ; MISHA BILENKO ; TOM FINLEY ; RAN GILAD-BACHRACH ; KRISTIN E. LAUTER ; MICHAEL NAEHRIG.** Crypto-Nets: Neural Networks over Encrypted Data. *CoRR,* 2014
- **JOPPE W. BOS ; KRISTIN LAUTER ; MICHAEL NAEHRIG.** Private predictive analysis on encrypted medical data. *Journal of Biomedical Informatics,* 2014, vol. 50, 234-243
- **RAPHAEL BOST ; RALUCA ADA POPA ; STEPHEN TU ; SHAFI GOLDWASSER.** Machine Learning Classification over Encrypted Data. *Cryptology ePrint Archive,* 2014, http://eprint.iacr.org/2014/331
- **A. PEDROUZO-ULLOA ; J. R. TRONCOSO-PASTORIZA ; F. PEREZ-GONZALEZ.** Number Theoretic Transforms for Secure Signal Processing. *IEEE Transactions on Information Forensics and Security,* May 2017, vol. 12 (5), 1125-1140
- **D. BOGDANOV ; L. KAMM ; S. LAUR ; V. SOKK.** Rmind: a Tool for Cryptographically Secure Statistical Analysis. *IEEE Transactions on Dependable and Secure Computing,* 2016, vol. 99, 1-1
- **V. NIKOLAENKO ; U. WEINSBERG ; S. LOANNIDIS ; M. JOYE ; D. BONEH ; N. TAFT.** Privacy-preserving ridge regression on hundreds of millions of records. *In Security and Privacy (SP), 2013 IEEE Symposium on,* May 2013, 334-348
- Public-Key Cryptosystems Based on Composite Degree Residuosity Classes. **P. PAILLIER.** EUROCRYPT'99, volume 1592 of LNCS. Springer, 1999, vol. 1592, 223-238
- **ODED REGEV.** On lattices, learning with errors, random linear codes, and cryptography. *J. ACM,* September 2009, vol. 56 (6), 34.1-34.40
- **YOSHINORI AONO ; TAKUYA HAYASHI ; LE TRIEU PHONG ; LIHUA WANG.** Fast and secure linear regression and biometric authentication with security update. *Cryptology ePrint Archive,* 2015, http://eprint.iacr.org/2015/692
- **YOSHINORI AONO ; TAKUYA HAYASHI ; LE TRIEU PHONG ; LIHUA WANG.** Scalable and secure logistic regression via homomorphic encryption. *Cryptology ePrint Archive,* 2016, http://eprint.iacr.org/2016/111
- **DAVID WU ; JACOB HAVEN.** Using Homomorphic Encryption for Large Scale Statistical Analysis. *Technical report,* 2012
- **THORE GRAEPEL ; KRISTIN E. LAUTER ; MICHAEL NAEHRIG.** ML Confidential: Machine Learning on Encrypted Data. In Information Security and Cryptology - ICISC 2012. *15th International Conference,* 28 November 2012, 1-21
- **V. LYUBASHEVSKY ; C. PEIKERT ; O. REGEV.** On Ideal Lattices and Learning with Errors over Rings. *J. ACM,* November 2013, vol. 60 (6), 43.1-43.35
- Fully homomorphic encryption without modulus switching from classical GapSVP. **ZVIKA BRAKERSKI.** Advances in Cryptology | CRYPTO 2012, volume 7417 of Lecture Notes in Computer Science. Springer, 2012, vol. 7417, 868-886
- **PETER J. BROCKWELL ; RICHARD A. DAVIS.** Introduction to Time Series and Forecasting. Springer-Verlag, 2002
- **P. J. DAVIS.** Circulant Matrices. American Mathematical Society, 1994
- **JUNFENG FAN ; FREDERIK VERCAUTEREN.** Somewhat Practical Fully Homomorphic Encryption. *IACR Cryptology ePrint Archive,* 2012, vol. 2012, 144, http://eprint.iacr.org/2012/144
- **H. J. NUSSBAUMER.** Fast Fourier Transform and Convolution Algorithms. Springer, 1982
- **SANFORD WEISBERG.** Applied Linear Regression. Wiley, 2005